# EUROPÄISCHE PATENTSCHRIFT

(11) **EP 2 050 326 B1**
(45) Veröffentlichungstag und Bekanntmachung des Hinweises auf die Patenterteilung: **07.09.2011**
(21) Anmeldenummer: 08017770.2
(22) Anmeldetag: 10.10.2008
(51) Int. Cl.: A01D 33/08, A01D 17/06

(54) **Förder- und Trennvorrichtung für Hackfrüchte sowie dafür vorgesehenes Verfahren**
Transport and dividing device for root crops and corresponding method
Dispositif de transport et de séparation pour fruits de hachage ainsi que procédé correspondant

(30) Priorität: 19.10.2007 DE 102007050090
(43) Veröffentlichungstag der Anmeldung: 22.04.2009
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Pott, Ulrich

(56) Entgegenhaltungen:
- EP-A- 0 673 593
- WO-A-97/14514
- DE-A1- 2 239 783
- US-A- 2 257 352

## Beschreibung

Die Erfindung betrifft eine Förder- und Trennvorrichtung für Hackfrüchte gemäß dem Oberbegriff des Anspruchs 1 sowie ein Verfahren zum Trennen von Hackfrüchten aus einem Gemisch gemäß dem Oberbegriff des Anspruchs 44.

Derartige Sieb- und Fördereinrichtungen sind in der Landtechnik seit langem bekannt, wobei gemäß DD 36 677 (1963) /1/ eine Einrichtung mit zwei Walzenrosten vorgesehen ist, auf deren jeweiligen Wellen scheibenähnliche Förderelemente versetzt zueinander angeordnet sind und im Siebspalt kammartig ineinandergreifen. Bei einer Sieb- und Trennvorrichtung gemäß DE 19 46 207 (1966) /2/ sind auf den kammartig zusammenwirkenden Walzenkörpern ellipsenförmige Scheiben als Förderelemente angeordnet, so dass die Förderleistung bei verbesserter Absiebung gesteigert werden kann. In DE 22 05 309 (1972) sowie DE 22 39 783 (1972) /3/ wird ein Hackfruchtreiniger vorgeschlagen, bei dem auf zwei gleichsinnig drehenden Trommeln jeweils schraubenlinienförmig gegenläufig angeordnete Leitrippen vorgesehen sind, mit denen ein Auseinanderziehen sowie eine intensivere Bewegung des Erntegutes erfolgt und damit das Abtrennen von Erdresten o. dgl. Beimengungen verbessert wird.

Bei einer Kartoffelerntemaschine gemäß DE 23 12 111 C2 (1974) /4/ ist im Bereich von zwei Siebförderbändern eine einzige mit schraubenlinienförmigen Erhöhungen versehene Walze angeordnet, mit der eine Verbesserung der Trennwirkung in dem Förderspalt zwischen den beiden Siebförderbändem erreicht wird.

Gemäß DE 26 51 206 (1976) /5/ wird eine Einrichtung zum Säubern von Wurzelfrüchten vorgeschlagen, bei der zwischen zwei drehbeweglichen Säuberungswalzen das Gemisch aufgebracht wird. Diese Säuberungswalzen können wahlweise in axialer Richtung und radialer Richtung durch entsprechende Antriebe bewegt werden. Zum Entfernen von auf den Walzen haftenden Erdschichten ist eine als Platte bzw. Finger ausgebildete Abstreifervorrichtung mit einem zusätzlichen Antriebsmechanismus vorgesehen.

Gemäß DE 28 11 611 C3 (1978) /6/ wird eine Enterdungsvorrichtung für Hackfrüchte vorgeschlagen, bei der die Trennorgane in Form von Scheiben-Walzen - ähnlich /1/, /2/ - so ausgebildet sind, dass die Scheiben mittig auf Lücke versetzt zueinander angeordnet ineinandergreifen. Dabei soll zusätzlich zur Förder- und Trennbewegung mittels jeweiliger als Taumelwerkzeuge angeordneter Scheiben eine Enterdung der Zwischenräume erreicht werden. Dieses System beruht auf einem geometrischen Konzept, das jedoch nicht praktikabel ist. Die geneigt zur Walzenlängsachse angeordneten Taumelscheiben sind schon bei einem geringe Feuchte aufweisenden Erdauftrag als Haftungskörper wirksam, da an diese gelangende Erdteile zu einer zylinderförmigen Formausfüllung führen, damit die gesamte Reinigungsstrecke zugesetzt wird, die Reinigungswirkung extrem verringert wird und nach kurzer Zeit eine Blockierung des Gesamtsystems erfolgen kann.

Auch bei einem ähnlich /6/ wenig praktikablen Rotationsscheider gemäß G 81 16 786.5 (1981) /7/ ist ebenfalls ein Reinigen von zwischen den Scheiben des Rotationsscheiders bestehenden Lücken vorgesehen, wobei die Scheiben jeweilige Verdickungen aufweisen, mit denen Bereiche der nachgeordneten Scheiben bzw. des Scheibenspaltes freigehalten werden sollen. Ähnlich diesen als Abstreifer vorgesehenen Verdickungen ist in DD 214 108 (1983) /8/ eine Walzenpaarung vorgeschlagen, bei der ein zwischen diese eingreifender Abstreifer (ähnlich /5/) zur Walzenreinigung genutzt wird.

In DE 36 36 668 C2 (1986) /9/ werden ein Verfahren und eine Anordnung zur Förderung und Reinigung von Rüben vorgeschlagen, wobei die Reinigungsstrecke ebenfalls versetzt angeordnete Scheiben auf jeweiligen Walzenkörpern aufweist. Die Reinigung des Systems bzw. des Erntegutes erfolgt dabei dadurch, dass ein Hochwerfevorgang entlang der Förderstrecke mehrfach wiederholt wird und damit das Erntegut von den eine geringere Wurfhöhe erreichenden Beimengungen getrennt werden kann. Im Bereich der kämmenden Scheiben können sich Erdteile, Krautreste o. dgl. an den Scheibenoberflächen ablagern, so dass die Siebwirkung nachteilig reduziert ist und aufwendige Reinigungsphasen erforderlich sind.

Gemäß DE 298 03 880 U1 (1998) /10/ ist eine Förder- und Trennvorrichtung mit jeweiligen Sternräder aufweisenden Walzenkörpern versehen, wobei diese Sternräder zur Verbesserung der Förder- und Trennfunktion jeweilige Finger mit unterschiedlichem Verformungs- und/oder Verlagerungsvermögen aufweisen. Diese Konstruktion ist ähnlich /4/ für eine Vorrichtung zum Trennen von Kraut vorgesehen, wobei eine Krautzupfwalze im Durchgangsspalt zwischen einer Umlenkwalze und einem Siebförderband angeordnet ist und eine Blockade des Systems vermieden wird. In DE 199 47 484 A1 (1999) /11/ weist eine Erntemaschine eine Krauttrennvorrichtung mit mehreren parallelachsig verlagerbaren Förderwalzen auf, zwischen denen ein variabler Spalt einstellbar ist, um die Sieb- und Förderleistung an die jeweiligen Erdbedingungen anzupassen.

Gemäß DE 299 15 450 U1 (1999) /12/ ist eine Trenn- und Oberleitwalze für Knollenfrüchte, insbesondere Kartoffeln, vorgeschlagen, wobei die Walze einen elastisch nachgiebig ausgebildeten Mantelteil aufweist, der zum Innenteil des Walzenkörpers hin ausweichbar ausgeführt wird. Damit wird ein elastisches System genutzt, mit dem ein Ansetzen von klebrigem Erdreich gemindert werden kann, da durch einen kräftige Walkarbeit ausführenden Teil des Walzenmantels die Reinigung erreicht wird.

Neben dieser vorstehend ersichtlichen Vielzahl von zusätzliche Bauteile erfordernden Abstreifer-Konstruktionen sind zur Säuberung auch steuertechnische Lösungen beim Antrieb der Walzen vorgeschlagen worden. Insbesondere können nach einer Unterbrechung der Gemischzufuhr die Walzen mit einer erhöhten Drehzahl so schnell bewegt werden, dass an der Walzenoberfläche eine Fliehkraft-Säuberung erreicht wird. Bei diesen Säuberungsverfahren sind zusätzliche Schutzeinrichtungen erforderlich, die Produktivität der Vorrichtung wird durch Ausfallzeiten während der Säuberung nachteilig beeinflusst und eine Abreinigung des Systems von Fasermaterialien als Gemisch mit klebrigen Erdstrukturen ist nicht vollständig erreichbar.

Die Erfindung befasst sich mit dem Problem, ein Verfahren zum Trennen von Hackfrüchten aus einem Gemisch sowie eine dafür vorgesehene Förder- und Trennvorrichtung zu schaffen, die auch bei vergleichsweise feuchte sowie zur Anhaftung neigende Beimengungen enthaltendem Fördergut blockadefrei einsetzbar sind, damit Ausfallzeiten durch zusätzliche Säuberungsphasen vermieden werden und eine Erhöhung der Produktivität von landwirtschaftlichen Trennvorgängen ermöglichen.

Die Erfindung löst dieses Problem mit einer Förder- und Trennvorrichtung mit den Merkmalen des Anspruchs 1 sowie einem Verfahren zum Trennen der Hackfrüchte aus einem Gemisch gemäß dem Anspruch 44. Weitere Ausgestaltungen ergeben sich aus den Ansprüchen 2 bis 43 sowie 45 bis 48.

Erfindungsgemäß wird für die Anwendung in landwirtschaftlichen Trennvorrichtungen ein Verfahren für eine funktional verbesserte Baueinheit vorgeschlagen, deren zumindest zwei Trennwalzen mit vergleichsweise geringem technischem Aufwand ihre Förder- und Trennfunktion auch bei Einsatzbedingungen mit hohe Erdfeuchte aufweisenden Erntegut-Beimengungen-Gemischen aufrecht erhalten. Dazu werden zur Anhaftung neigende Bodenstrukturen, pflanzliche Beimengungen u. dgl. Teile bereits während deren Anströmphase zur Oberfläche eines jeweiligen Walzenkörpers der Trennwalzen hin einer von diesen wegführenden Abtragwirkung ausgesetzt, so dass durch eine dem Förder-, Trenn- und Siebvorgang überlagerbare Verfahrensführung mit Zwangsreinigung permanent gesäuberte Wirkflächen für die Förder- und Trennarbeit der Vorrichtung bzw. deren Walzenkörper bereitgestellt werden.

Das erfindungsgemäße Verfahren mit Zwangsreinigung geht in Analyse der Vielzahl von im Stand der Technik aufgezeigten Lösungen davon aus, dass das bei klebrigen Böden bestehende Anhaftungs-Problem mit Taumelscheiben o. dgl. Rotationskonturen nicht zu beseitigen ist. Deshalb basiert das innovative Konzept zur Vermeidung dieses auf den Walzenkörpern bisher auftretenden Erdaufbaus auf einem erstmals in der Landtechnik kombinierten Wirkmechanismus, bei dem ein zwangsweise sowohl radial als auch axial in jeweiligen Erdaufbauzonen wirksamer Abtrag- und Mitnahmeeffekt gezielt ausgenutzt wird und die paarweise zusammenwirkenden Trennwalzen unmittelbar gereinigt werden.

Mit einer vorteilhaft einfachen Ausführung der Walzenkörper-Anordnung bzw. deren Antriebsbaugruppen wurde überraschend nachgewiesen, dass im Siebspalt zwischen den beiden Walzenkörpern eingeleitete Rotationsbewegungen und zusätzliche Stell- bzw. Relativbewegungen in eine kombinierte Mitnahme- und Scherwirkung umgesetzt werden können und damit die zur Anhaftung auf den Walzenkörpern neigenden Teile des Siebgutes permanent abgetragen und ausgefördert werden. Dabei werden jeweilige Mitnahmeprofile der insbesondere paarweise zusammenwirkenden Walzenkörper so gesteuert, dass zusätzlich zu deren Rotationsbewegung eine relative Schwenkverstellung zu einer schraubenlinienförmigen "Axialverlagerung" führt. Damit können jeweilige axial bzw. radial phasenversetzte Reinigungsbereiche vorgegeben werden, mit denen der gesamte Umfang der beiden in einem Reinigungsspalt "kämmenden" Walzenkörper durch eine sich schraubenlinienförmig abbildende Scherzone zwangsgereinigt wird. Die Walzenkörper stehen dabei in einem gegenseitig wirkenden "Reinigungseingriff", so dass Erdteile, Pflanzenfasern u. dgl. Gemischinhalte unmittelbar von den Oberflächen abgerieben, abgetrennt oder abgeschält werden.

Das erfindungsgemäße Konzept dieses Zwangsreinigungs-Verfahrens ist sowohl für Vorrichtungen mit in Richtung der Trennwalzen verlagerbarem Fördergut in Form von Axialförderern als auch für Querförderer, bei denen das Fördergut quer zu den Längsachsen der rotierenden Trennwalzen verlagert wird, geeignet. Auch beim Zusammenwirken von profilierten Walzenkörpern mit Glattwalzen wird die Zwangsreinigung erreicht.

In der axialen Trennvorrichtung mit insbesondere paarweise gegensinnig rotierenden Walzenkörpern mit Mitnahmeprofil ist ein zusätzlich zum Drehantrieb wirksamer Phasen-Versteller vorgesehen, mit dem insbesondere auch während des Förder-und Trennvorganges die relative Eingriffslage der miteinander kämmenden Mitnahmeprofile geändert werden kann. Diese umlaufenden Mitnahmeprofile bzw. deren jeweils im Schereingriff befindlicher Profilbereich kann damit innerhalb des Siebspaltes permanent "hin- und herverlagert" werden, so dass sich die Walzenkörper auf einer umfangsseitig schraubenlinienförmig abgebildeten Reinigungslinie entsprechend dem Mitnahmeprofil gegenseitig säubern und die dabei konstant wirksame Scherzone zwischen zwei axial beabstandeten Extrempunkten kontinuierlich verschoben wird. Für die dem Drehantrieb zu überlagernde radiale Stellbewegung zur Erzeugung der sich verlagernden Scherzone ist in einfachster Ausführung ein zusätzlicher Antrieb mit mechanischem Getriebe vorgesehen, mit dem die Phasenverschiebung mittels einer Schwenkverstellung an den Walzenkörpern eingeleitet wird.

Bei einer Ausführung des Trennwalzen-Systems nach Art eines Querförderers wird die Phasenverschiebung im Bereich der Walzenkörper bzw. deren Mitnahmeprofil ebenfalls durch einen zusätzlichen Antrieb erzeugt, wobei hier die radiale Phasenlage der beiden miteinander kämmenden Walzenkörper durch eine Stellbewegung an einem Getriebe mit Losrad erzeugt wird. Diesem Losrad wird eine lineare Stellbewegung vermittelt und über eine Getriebeverbindung in eine radiale Schwenkbewegung zumindest eines der "kämmenden" Walzenkörper so übersetzt, dass damit im Bereich der jeweiligen Mitnahmeprofile die Relativbewegung der sich axial und radial "verlagernden" Scherzone erreicht ist.

In einer weiteren vorteilhaften Ausgestaltung des erfindungsgemäßen Konzeptes ist vorgesehen, dass die permanente Zwangsreinigung für eine Trenneinheit verwendet wird, bei der ein Querförderer und ein Längsförderer miteinander kombiniert sind. Ebenso ist denkbar, dass das vorbeschriebene Konzept des Zwangsreinigungs-Ver fahrens direkt in entsprechende Konstruktionen für einen Gemischtransport in Erntemaschinen - z. B. Rüben- oder Kartoffelernter - integriert wird oder separate Enterdungs- oder Fraktioniereinheiten mit den Bauteilen der erfindungsgemäßen Zwangsreinigung bereitgestellt werden.

Weitere Einzelheiten und vorteilhafte Ausgestaltungen der Erfindung ergeben sich aus der nachfolgenden Beschreibung und den Zeichnungen, die mehrere Ausführungsbeispiele erfindungsgemäßer Förder- und Trennvorrichtungen für Hackfrüchte zeigen. In der Zeichnung zeigen:
- Fig. 1: eine perspektivische Darstellung einer als Axialwalzentisch ausgebildeten Förder- und Trennvorrichtung mit eine Zwangsreinigung aufweisender Trennwalzen-Anordnung,
- Fig. 2: eine Schnittdarstellung der erfindungsgemäßen Zwangsreinigung im Bereich von miteinander kämmenden Mitnahmeprofilen paarweise zusammenwirkender Walzenkörper gemäß einer Linie II-II in Fig. 1,
- Fig. 3: eine Draufsicht des Axialwalzentisches gemäß Fig. 1,
- Fig. 4: eine antriebsseitige Stirnansicht des Axialwalzentisches gemäß Fig. 3 mit einem eine radiale Phasenverstellung der Walzenkörper bewirkenden Stellmechanismus,
- Fig. 5: eine Ansicht des Stellmechanismus ähnlich Fig. 4, wobei nur dessen Antriebsorgan mit einem Umlenkgetriebe dargestellt ist,
- Fig. 6: eine Seitenansicht ähnlich Fig. 4 mit dem Stellmechanismus in einer ersten Endstellung bei der Phasenverstellung der Walzenkörper,

- Fig. 7: eine teilweise geschnittene Draufsicht des Axialwalzentisches mit den Walzenkörpern bzw. deren Mitnahmeprofilen in der Endstellung gemäß Fig. 6,
- Fig. 8: eine Seitenansicht ähnlich Fig. 4 mit einer zweiten Endstellung bei der Phasenverstellung der Walzenkörper,
- Fig. 9: eine teilweise geschnittene Draufsicht auf den Axialwalzentisch mit der zweiten Endstellung gemäß Fig. 6,
- Fig. 10: eine Stirnansicht des Axialwalzentisches gemäß Fig. 3 auf das dem Stellmechanismus (Fig. 4) gegenüberliegende Ende der Walzenkörper mit Getriebeteilen,
- Fig. 11: eine perspektivische Darstellung einer zweiten Ausführung der in Form eines Querwalzentisches ausgebildeten Förder- und Trennvorrichtung,
- Fig. 12: eine Seitenansicht des Querwalzentisches gemäß Fig. 11 auf die einenends an den Walzenkörpern angreifende Baugruppe mit dem Antrieb und einem zusätzlichen Stellmechanismus,
- Fig. 13: eine Vorderansicht auf den Querwalzentisch gemäß Fig. 11,
- Fig. 13a undFig. 13b: jeweilige Schnittdarstellungen der beiden Walzenkörper mit Zwangsreinigung gemäß einer Linie IV-IV in Fig. 17 bzw. Linie III-III in Fig. 15,
- Fig. 14: eine vergrößerte Prinzipdarstellung der antriebsseitigen Phasenverstellung der Walzenkörper mit Mitnahmeprofil gemäß einer Linie III-III in Fig. 15,
- Fig. 15: eine teilweise geschnittene Draufsicht auf den Querwalzentisch gemäß Fig. 14,
- Fig. 16: eine Prinzipdarstellung mit einer zweiten Stellphase bei der Zwangsreinigung der Walzenkörper gemäß einer Linie IV-IV in Fig. 17,
- Fig. 17: eine Draufsicht auf den Querwalzentisch gemäß Fig. 16,
- Fig. 18Fig. 19: eine perspektivische Gesamtansicht der in einer dritten Ausführung mit Querwalzentisch und Axialwalzentisch als Baueinheit ausgebildeten Förder- und Trennvorrichtung, eine Seitenansicht der Baueinheit gemäß Fig. 18,
- Fig. 20: eine vergrößerte Vorderansicht einer im Bereich zwischen Quer- und Axialwalzentisch in die Baueinheit gemäß Fig. 18 integrierten Trenn-einrichtung,
- Fig. 21: eine Seitenansicht der Trenneinrichtung gemäß Fig. 20,
- Fig. 22: eine Draufsicht der Trenneinrichtung gemäß Fig. 20,
- Fig. 23: eine Perspektivdarstellung einer Konstruktion mit mehreren Trenn-strecken sowie der Einrichtung gemäß Fig. 20,
- Fig. 24: eine Seitenansicht der Vorrichtung gemäß Fig. 23,
- Fig. 25: eine Vorderansicht der Vorrichtung gemäß Fig. 23,
- Fig. 26: eine Stirnansicht auf die Trennwalzen einer separaten Fraktioniereinheit,
- Fig. 27 bisFig. 29Fig. 30: jeweilige Draufsichten einer Förderstrecke der Fraktioniereinheit mit vier Trennwalzen gemäß Fig. 26, und eine Draufsicht ähnlich Fig. 27 mit veränderten Mitnahmeprofilen im Bereich der Trennwalzen.

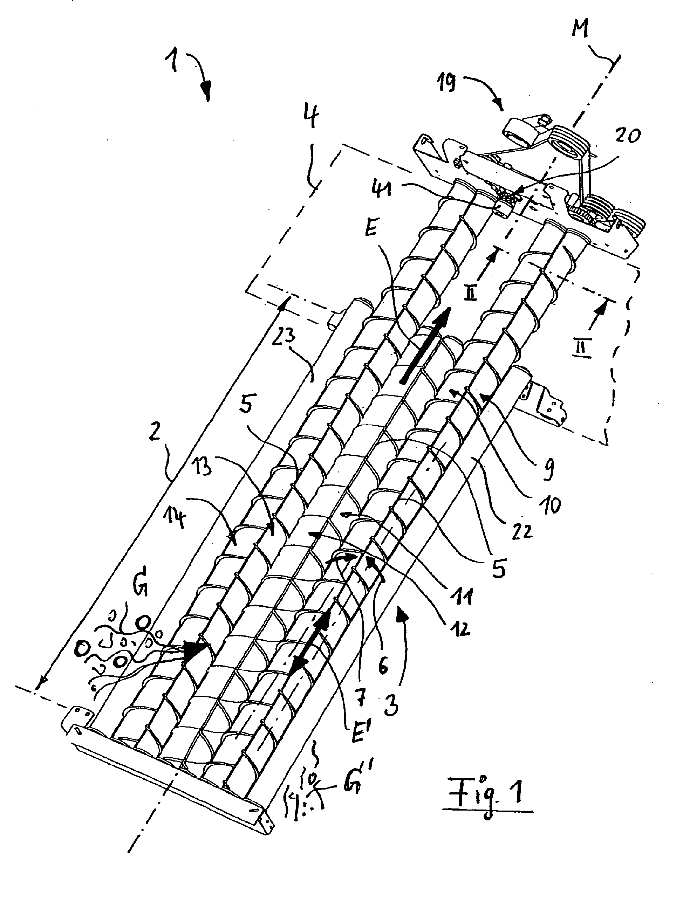

In Fig. 1 ist eine insgesamt mit 1 bezeichnete Förder- und Trennvorrichtung für landwirtschaftliches Erntegut dargestellt. Derartige Vorrichtungen weisen eine Trennstrecke 2 auf, auf die ein Gemisch G aus Kartoffeln, Rüben o. dgl. Erntegut in jeweiliger Gemengelage mit Steinen, Kluten o. dgl. Beimengungsteilen aufgelegt werden kann. Durch entsprechend rotierend angetriebene Trennwalzen 3 wird auf diesen oberseitig im wesentlichen das Erntegut weitergeleitet (Pfeil E), so dass dieses auf eine nicht näher dargestellte endseitige Entnahmevorrichtung 4 o. dgl. Baugruppe gelangt. Die Trennwalzen 3 sind dabei im Bereich eines Siebspaltes 5 so beabstandet, dass bei Einleitung einer entsprechenden Siebphase mit rotierenden Trennwalzen 3 im wesentlichen die Beimengungen G' unterhalb der Trennstrecke 2 austragbar sind. Bei einem hohen Anteil von zur Anhaftung neigenden Bestandteilen im Gemisch G besteht bei bekannten Trennvorrichtungen 1 die Gefahr, dass durch Anlagerungen der Siebspalt 5 verengt wird und damit die Durchsatzleistung der Vorrichtung 1 verringert ist bzw. eine Unterbrechung des Siebvorganges zur Reinigung der Trennwalzen 3 erforderlich wird.

Das erfindungsgemäße Konzept schlägt allgemein mit 1 bezeichnete Trennvorrichtungen vor, deren Trennwalzen 3 durch eine unmittelbare Zwangsreinigung (Pfeil Z,

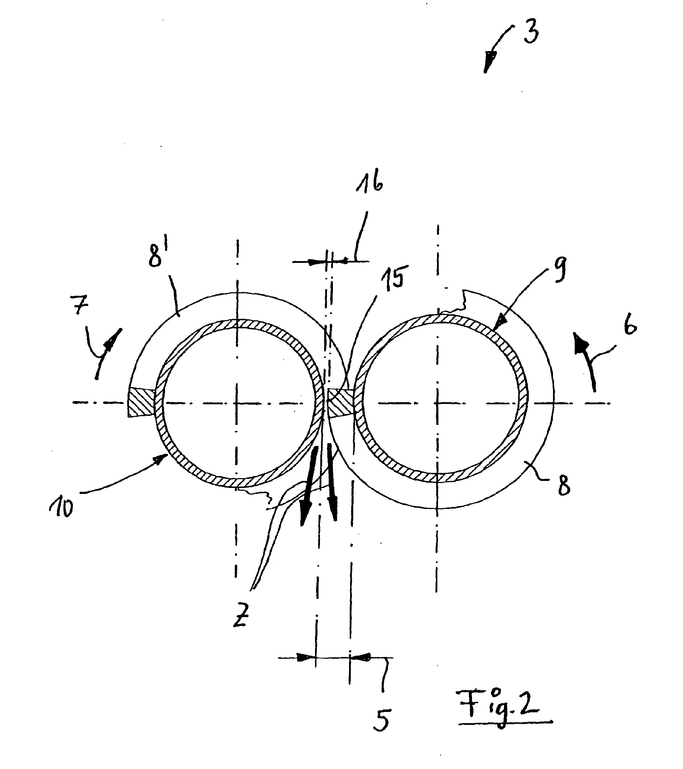

Fig. 2) permanent von anhaftbaren Teilen des Gemisches G freihaltbar sind. Diese Zwangsreinigung Z ist für Sieb- und Trennabläufe in der Landtechnik an weitgehend beliebigen Walzen-Trenner-Einheiten einsetzbar, wobei die in der Konstruktion integrierte Zwangsreinigung bisher erforderliche zusätzliche Reinigungselemente und/oder-pausen entbehrlich macht.

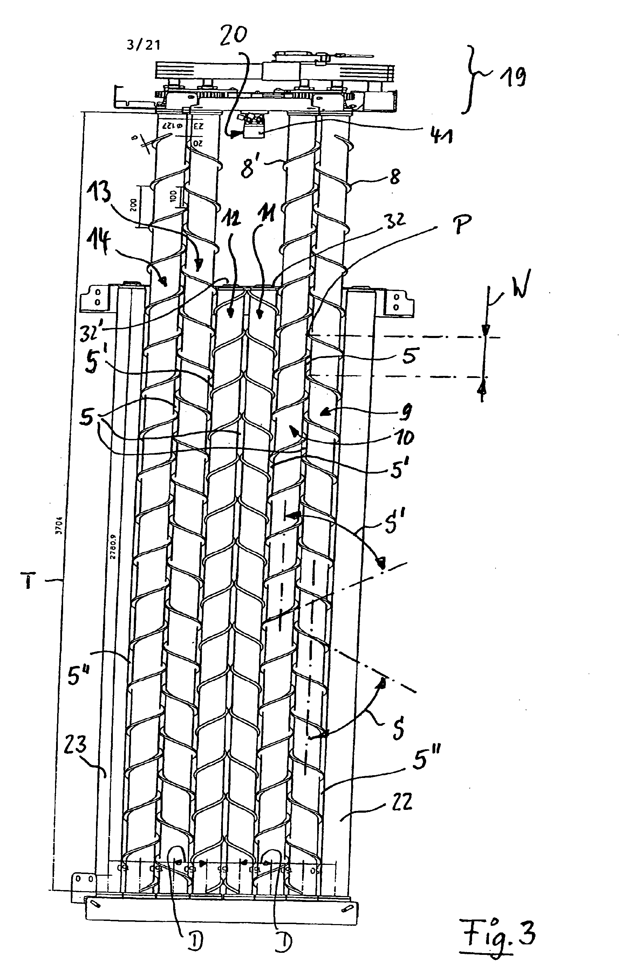

Die Zusammenschau von Fig. 2 und Fig. 3 verdeutlicht, dass diese Zwangsreinigung Z ohne zusätzliche Hilfswerkzeuge o. dgl. unmittelbar im Bereich des Siebspaltes 5 erfolgt. Dabei wird ein optimaler Reinigungseffekt dadurch erreicht, dass die Zwangsreinigung Z permanent in einer Siebphase der Vorrichtung 1 bzw. der sich gegensinnig drehenden Trennwalzen 3 (Drehrichtungspfeile 6 und 7, Fig. 2) durchführbar ist. In einfachster Ausführung ist vorgesehen, dass zwischen paarweise zusammenwirkenden Trennwalzen 3 haftende und/oder anhaftbare Teile des zugeführten Gemisches G mit der Zwangsreinigung Z erfasst werden (Prinzipbild gemäß Fig. 2).

Durch überlagerte Bewegungskomponenten, nämlich jeweilige Drehbewegungen 6 und 7 sowie eine zur Förderbewegung E gleichlaufende oder entgegengesetzte "Axialverschiebung" E' im Siebspalt 5 führen zu einem Konzept der Zwangsreinigung Z, die gleichzeitig mit einer Siebphase (Ableitung G') wirksam ist und dabei in axialer Richtung der Trennwalzen 3 durch versetzte Wirkzonen W (Fig. 3, Fig. 7, Fig. 9) definiert wird. Für diesen allgemeinen Wirkkomplex einer Zwangsreinigung Z können die Trennwalzen 3 mit an sich bekannten Walzenkörpern 9 versehen sein, die ein umfangsseitiges Mitnahmeprofil 8, 8' als "Reinigungsglied" aufweisen. Diese Walzen-Anordnung ist dabei so optimiert, dass jeweils paarweise zusammenwirkende Walzenkörper 9, 10; 11, 12 und 13, 14 sowohl für eine Weiterleitung E und Trennung G' der Gemischteile als auch die unmittelbare permanente Zwangsreinigung Z des jeweiligen Siebspaltes 5 nutzbar sind.

Die Draufsicht gemäß Fig. 3 verdeutlicht, dass die paarweise angetriebenen Walzenkörper 9, 10 jeweils die radial und/oder axial zusammenführbaren Mitnahmeprofile 8, 8' aufweisen und diese in dem als lichte Weite zwischen den Walzenkörpern 9, 10 definierten Siebspalt 5 zusammenwirken, derart, dass dabei ein eine Scherzone 15 mit Zwangsreinigung Z definierender Reinigungsspalt 16 (Fig. 2) mittels entsprechender Walzenabmessungen vorgebbar bzw. an die Konstruktions- und/oder Erntebedingungen anpassbar ist.

Die vergrößerte Ausschnittsdarstellung gemäß Fig. 2 verdeutlicht, dass die einen kämmenden Eingriff aufweisenden Mitnahmeprofile 8, 8' der paarweise gegensinnig drehenden Walzenkörper 9, 10 (entsprechend: 11, 12; 13, 14) mit den jeweiligen Scherzonen 15 (bzw. den entsprechend der Länge der Trennstrecke 2, Fig. 3 vorhandenen Wirkzonen W) eine nach Art eines mechanisch abrasiven Systems wirksame Zwangsreinigung Z für die gesamten Umfangskonturen der Walzenkörper bilden.

Mit dem erfindungsgemäßen Konzept der Zwangsreinigung Z werden die in den Reinigungsspalt 16 bzw. Siebspalt 5 gelangenden, zu Anhaftungen neigenden Teile des Gemisches G im Bereich der als kontinuierliche Reinigungsglieder wirksamen Mitnahmeprofile 8, 8' sowohl von deren Kontur als auch vom Umfang der paarweise zusammenwirkenden Walzenkörper 9, 10; 11, 12; 13, 14 abgestreift. Für diesen eine komplexe Steuerung des jeweiligen Trennsystems erfordernden Reinigungsablauf wird eine axiale Verlagerung und/oder radiale Schwenkverstellung der zumindest zwei Walzenkörper 9, 10 als zusätzliche Stell- und Wirkkomponente in das System der rotierend angetriebenen Trennwalzen 3 eingebracht. Damit wird - im Unterschied zu bekannten technischen Lösungen - erstmals ein mittels der Antriebsrotation radial umlaufend wirksamer und mittels der Relativverschiebung E' axial "wandernder" Reinigungsspalt 16 in den Scherzonen 15 definiert, in denen der überraschende Effekt einer permanenten Zwangsreinigung Z gewährleistet ist.

Zur technischen Realisierung dieses grundlegenden Konzeptes können die Mitnahmeprofile 8, 8' entsprechend ihrer jeweiligen Größenausbildung, Anordnung auf dem Walzenkörper 9, 10 und/oder Querschnittskonturierung so vorgegeben werden, dass entsprechend spezifischer Trenn- und Förderbedingungen von Hackfrüchten o. dgl. Produkte mit jeweiligen weitgehend variablen Reinigungsspalten 16 eine Verfahrensoptimierung möglich.

In der ersten Ausführungsform der Vorrichtung 1 gemäß Fig. 1 bis 10 sind Walzenkörper 9, 10, 11, 12, 13, 14 vorgesehen, deren jeweilige Mitnahmeprofile 8, 8' wendel- bzw. schraubenlinienförmig über dem Umfang verlaufen. Zum Zweck einer einfacheren Darstellung werden die sich wiederholenden Mitnahmeprofile 8, 8' nicht an jedem Walzenkörper bezeichnet.

Aus der Draufsicht des Systems gemäß Fig. 3 wird deutlich, dass das beispielhaft hervorgehobene Walzenkörper-Paare 9, 10 im Bereich der wendelförmigen Profilkörper 8, 8' mit jeweils zum Siebspalt 5 hin gegenläufige Steigung aufweisenden "Schraubenlinien" versehen ist (Steigung S, S'). Dabei wird auch deutlich, daß die Walzenkörper 9, 10 mit den die Reinigungsspalte 16 bildenden Mitnahmeprofilen 8, 8' in bevorzugter Ausführung einstückig ausgebildet sein können.

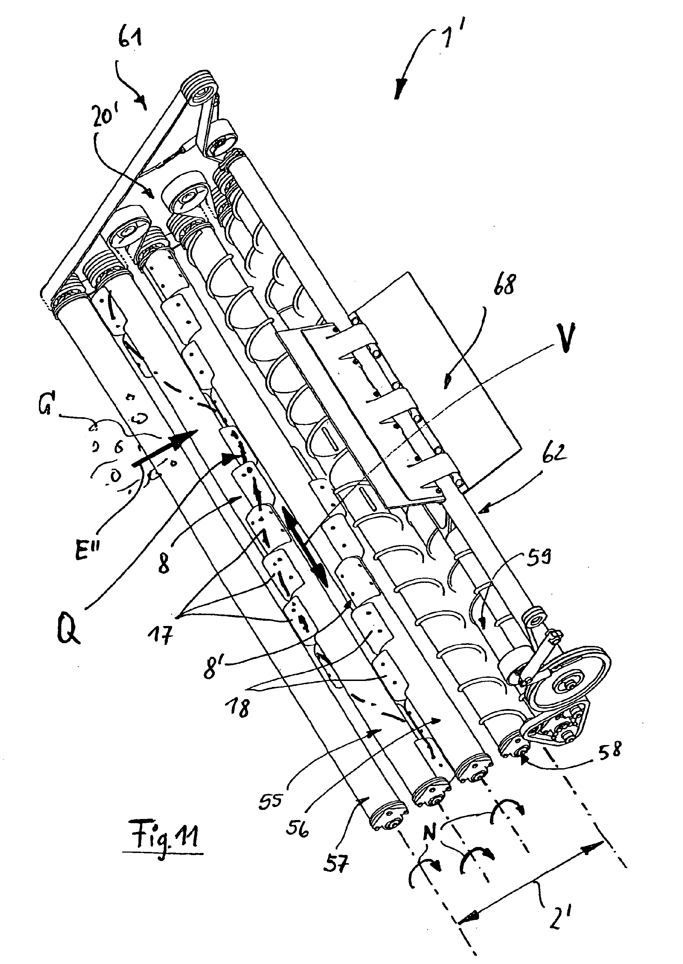

In einer weiteren Ausführungsform der Walzenkörper (ähnlich: Fig. 11) ist vorgesehen, dass deren wendelförmig verlaufende Mitnahmeprofile in Form von Segmenten 17, 18 o. dgl. Teilen ausgeführt werden. Dabei kann ebenfalls vorgesehen sein, dass die Mitnahmeprofile als einen axialen Abstand auf den jeweiligen Walzenkörpern aufweisende Fingerprofile ausgebildet sind. Entsprechend diesen an sich bekannten Walzengestaltungen sind prinzipiell auch Ein- bzw. Zwei-Fingervarianten denkbar (nicht dargestellt) und an diesen die Zwangsreinigung Z ausführbar.

Die in Fig. 1 bis 10 dargestellte erste Ausführung der Vorrichtung 1 weist im Bereich der als jeweilige Paare zusammenwirkenden und mittels eines an sich bekannten Förderantriebs 19 antreibbaren Walzenkörper 9 bis 14 zumindest einen zusätzlichen Stellantrieb 20 auf, mit dem zumindest einer der Walzenkörper je Paar zusätzlich zum Drehantrieb (Pfeil 6, 7) radial und/oder axial so verlagerbar ist, dass die vorbeschriebene Zwangsreinigung Z eintritt.

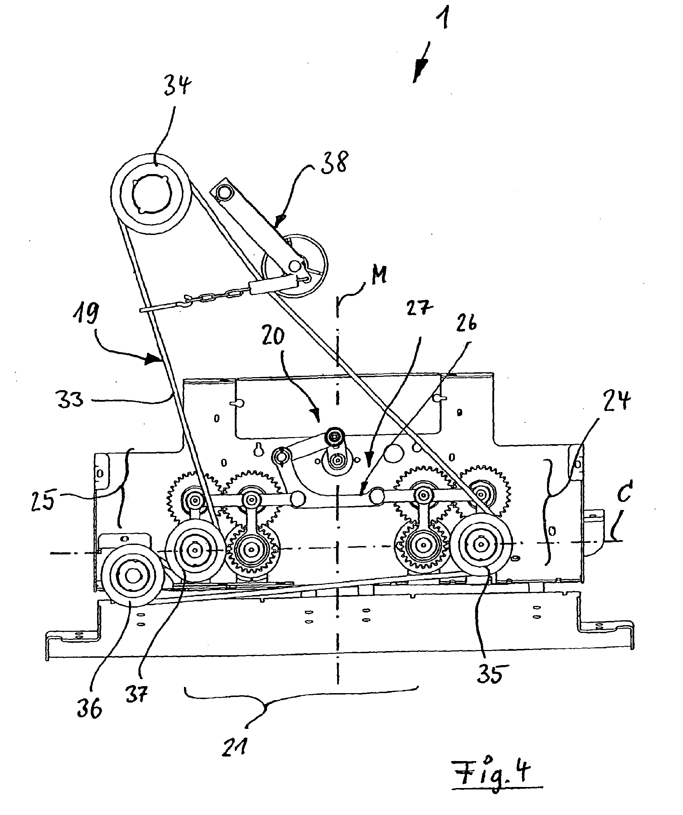

Diese Konstruktion des Antriebskonzeptes ist so ausgelegt, dass beim Betrieb der Vorrichtung 1 der Förderantrieb 19 und der zumindest eine Stellantrieb 20 (Fig. 4) gleichzeitig zuschaltbar sind. Damit wird an den jeweiligen Walzenkörper-Paaren die Zwangsreinigung Z im Bereich der Mitnahmeprofile 8, 8' aktiviert und ein komplexer Sortier- und Selbstreinigungsvorgang mit Zwangsreinigung so in Gang gesetzt, dass die vollständige Gemischtrennung über eine lange Einsatzzeit der Vorrichtung 1 möglich ist. In einer weiteren Ausgestaltung ist denkbar, dass zusätzlich zum Förderantrieb 19 mehrere der Stellantriebe 20 in das System integriert werden (nicht dargestellt).

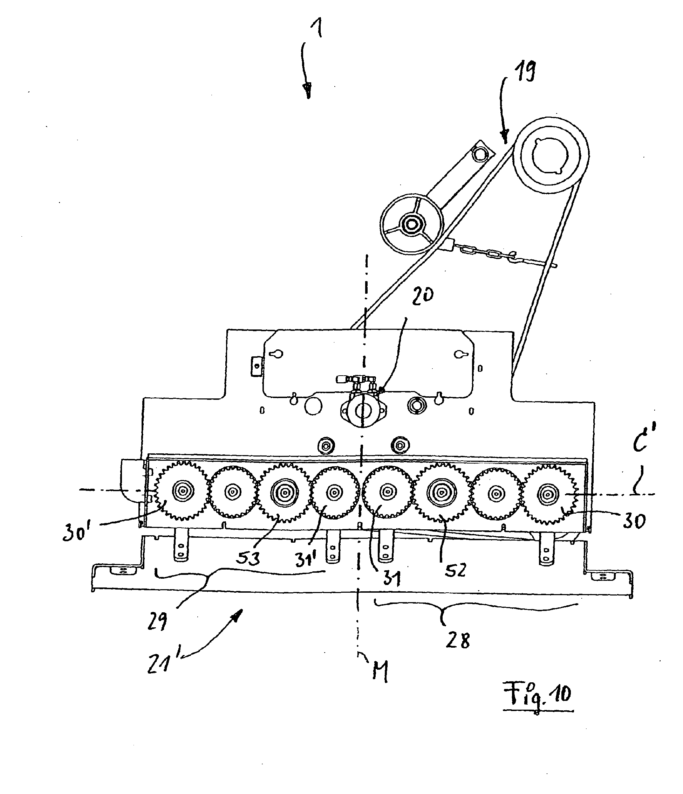

Die vergrößerten Detailansichten gemäß Fig. 4 und 10 zeigen in jeweiligen Stirnansichten die in horizontalen Eingriffsebenen C bzw. C' zusammenwirkenden Paare von Walzenkörpern, wobei in allgemein mit 21, 21' bezeichnete Getriebeverbindungen der Förderantrieb 19 und der gemeinsame Stellantrieb 20 integriert sind, so dass die jeweiligen Mitnahmeprofile 8, 8' durch eine nachfolgend näher beschriebene zusätzliche Schwenkverstellung die radiale und axiale Zwangsreinigung Z bewirken (durch Änderungen der Relativlage der Mitnahmeprofile 8, 8' in der Wirkzone W gemäß Fig. 3, Fig. 7 und Fig. 9).

Bei dem dargestellten Antriebskonzept ist der Förderantrieb 19 gleichzeitig mit dem radialen Stellantrieb 20 wirksam, wobei durch entsprechende konstruktive Umgestaltungen auch jeweilige Einzelantriebe oder zusätzliche axiale Schubantriebe für die Walzenkörper denkbar sind (nicht dargestellt). Für eine optimale Auslegung der jeweiligen Länge der Trennstrecke 2 (Fig. 1) bzw. 2' (Fig. 11) sind der jeweilige Stellantrieb 20 und die Getriebeverbindungen 21, 21' endseitig an den Walzenkörpern vorgesehen. Denkbar ist auch, für eine nicht näher dargestellte Vorrichtung einen zentralen Antrieb für die Förderbewegung E zu installieren.

Mit der Vorrichtung 1 gemäß Fig. 1 bis Fig. 10 ist eine Trennstrecke 2 nach Art eines Axialwalzentisches gezeigt, bei dem die in axialer Ausrichtung parallel zur Förderrichtung E des Gemisches G verlaufenden Walzenkörper vorgesehen sind. Dieser Axialwalzentisch weist mehr als die vorstehend als Bezugsgröße für die Zwangsreinigung Z beschriebenen zwei paarweise zusammenwirkenden Walzenkörper 9 und 10 auf. In zweckmäßiger Ausführung ist der Axialwalzentisch ausgehend von seiner zwischen einem ersten Walzenkörper-Paar 11, 12 verlaufenden Mittellängsebene M nebengeordnet mit sowohl einem zweiten als auch einem dritten Walzenkörper-Paar 9, 10 bzw. 13, 14 versehen, wobei sämtliche dieser Paare jeweils gegensinnig umlaufende Walzenkörper aufweisen.

Die Draufsicht gemäß Fig. 3 verdeutlicht auch, dass die jeweils mit gegensinnig zum Siebspalt 5 hin umlaufenden Mitnahmeprofilen 8, 8' versehenen Walzenkörperpaare auch zum nebengeordneten Paar hin jeweils einen einen Siebspalt 5' bildenden Abstand D aufweisen. Dabei wird auch deutlich, dass dem zweiten und dem dritten Walzenkörper-Paar 9, 10 bzw. 13, 14 jeweils außenseitig als zusätzliches Trennelement eine Glattwalze 22, 23 zugeordnet werden kann, wobei diese zu einem ebenfalls eine Zwangsreinigung aufweisenden Siebspalt 5" hin so umläuft, dass ein seitliches Übertreten von Erntegut verhindert und dieses permanent in Förderrichtung E weitergegeben wird.

Die konstruktive Gestaltung der Getriebe 21 (antriebsseitig) bzw. 21' (anderenends) ergibt sich aus der Zusammenschau von Fig. 4 und Fig. 10, wobei deutlich wird, dass die drei Walzenkörper-Paare einenends im Bereich des Stellantriebes 20 jeweilige das zweite 9, 10 und das dritte Paar 13, 14 direkt erfassende Zahnradgetriebe 24, 25 aufweisen. Diese beiden Zahnradgetriebe 24 und 25 sind mittels eines eine Gestängebaugruppe 26 aufweisenden und am Stellantrieb 20 angreifenden Zusatzantriebes 27 gemeinsam betätigbar. Die andererseits im Bereich der Horizontalebene C' (Fig. 10) angeordneten Verbindungsteile der drei Walzenkörper-Paare sind so aufgebaut, dass unmittelbar gegenüberliegend dem Stellantrieb 20 zwei mittig im Bereich der Längsmittelebene M geteilte Zahnradsätze 28 und 29 wirksam sind. In zweckmäßiger Ausführung wird dabei durch ein jeweiliges äußeres Zahnrad 30, 30' die jeweilige Glattwalze 22 bzw. 23 indirekt angetrieben. Gleichfalls zeigt diese Gesamtschau von Fig. 3 und Fig. 10, dass das zentrale erste Walzenkörper-Paar 11, 12 ebenfalls indirekt mittels jeweiliger Zahnräder 31, 31' angetrieben ist und das Walzenkörper-Paar 11, 12 am anderen Ende bei 32, 32' drehgelagert wird.

Der antriebsseitige Aufbau (Fig. 4 bis Fig. 6) ist dabei so konzipiert, dass die Zahnradgetriebe 24, 25 durch einen als Förderantrieb 19 vorgesehenen Riementrieb 33 mit entsprechenden Umlenkscheiben 34 bis 37 und einer Spanneinheit 38 verbunden sind und damit eine synchrone Drehbarkeit der Baugruppen des Systems gewährleistet ist.

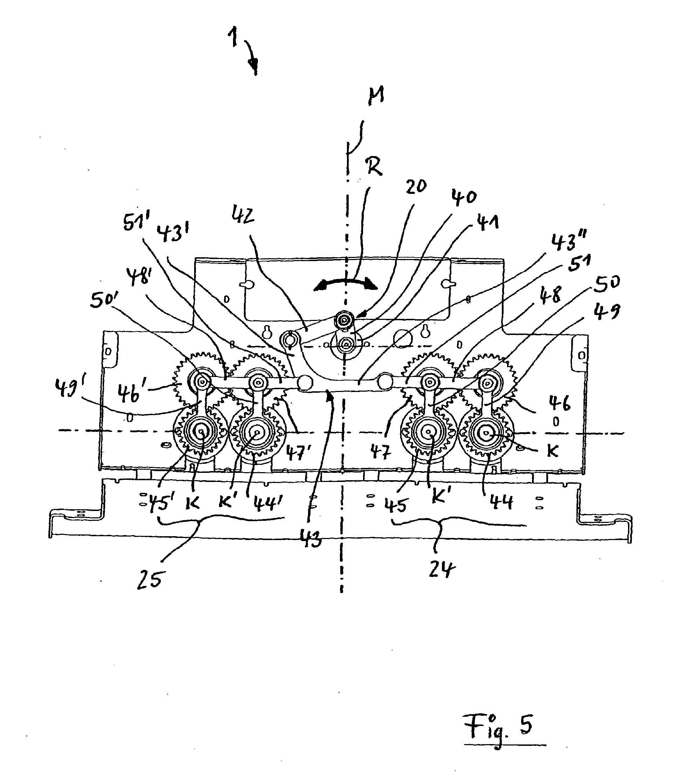

Zur besseren Verdeutlichung der die Zwangsreinigung Z ermöglichenden Phasenverstellung im Bereich der drei Walzenkörper-Paare 9 bis 14 sind in Fig. 5 die Bauteile des Förderantriebs 19 nicht dargestellt, so dass die Einzelheiten im Bereich der beiden Zahnradgetriebe 24 und 25 deutlich werden. Der mit dem Stellantrieb 20 zusammenwirkende Zusatzantrieb 27 weist dabei einen mittels einer Kurbel 40 an der Gestängebaugruppe 26 angreifenden Motor 41 (beispielsweise ein Hydromotor) auf, der zentral im Bereich der Mittellängsebene M abgestützt ist. An der Kurbel 40 ist endseitig ein Umlenkhebel 42 angelenkt und dieser wirkt mit einer zu den beiden Zahnradgetrieben 24 und 25 gerichteten, jeweilige Schenkel 43' und 43" aufweisenden Schubstange 43 zusammen.

Diese zur Schwenkverstellung der Walzenkörper 9 bis 14 vorgesehenen Zahnradgetriebe 24 und 25 weisen ihrerseits jeweilige mit den Antriebszahnrädern 44 und 45 bzw. 44' und 45' der beiden direkt angetriebenen Walzenkörper-Paare 9, 10 bzw. 13, 14 in Eingriff befindliche Stellzahnräder 46 und 47 bzw. 46' und 47' auf. Diese Steilzahnräder 46, 47 sind dabei mittels einer jeweiligen Querstange 48, 48' verbunden und durch einen jeweiligen Vertikal hebel 49, 50 bzw. 49', 50' schwenkbar den jeweiligen Achsen K, K' der Walzenkörper-Paare zugeordnet.

Die vorbeschriebenen Zahnradsysteme 24, 25 werden dadurch beeinflusst, dass die beiden Stellzahnräder 46, 47, 46', 47' durch einen jeweiligen Verbinder 51, 51' mit der Schubstange 43 gelenkig verbunden sind. Mittels des Motors 41 kann eine allgemein mit R bezeichnete Drehbewegung (Fig. 5) eingeleitet werden. Diese Zusatz-Drehbewegung kann mittels des Umlenkhebels 42 auf die Schubstange 43 übertragen werden, so dass durch eine Schwenk-Schubbewegung dieses zentralen Zusatzantriebes 27 eine gleichsinnige Schwenkung der - insbesondere mit dem Förderantrieb 19 gleichsinnig umlaufenden - Walzenkörper-Paare bewirkt ist und damit den Mitnahmeprofilen 8, 8' die Relativbewegung nach Art der axialen Verlagerung E' vermittelt wird.

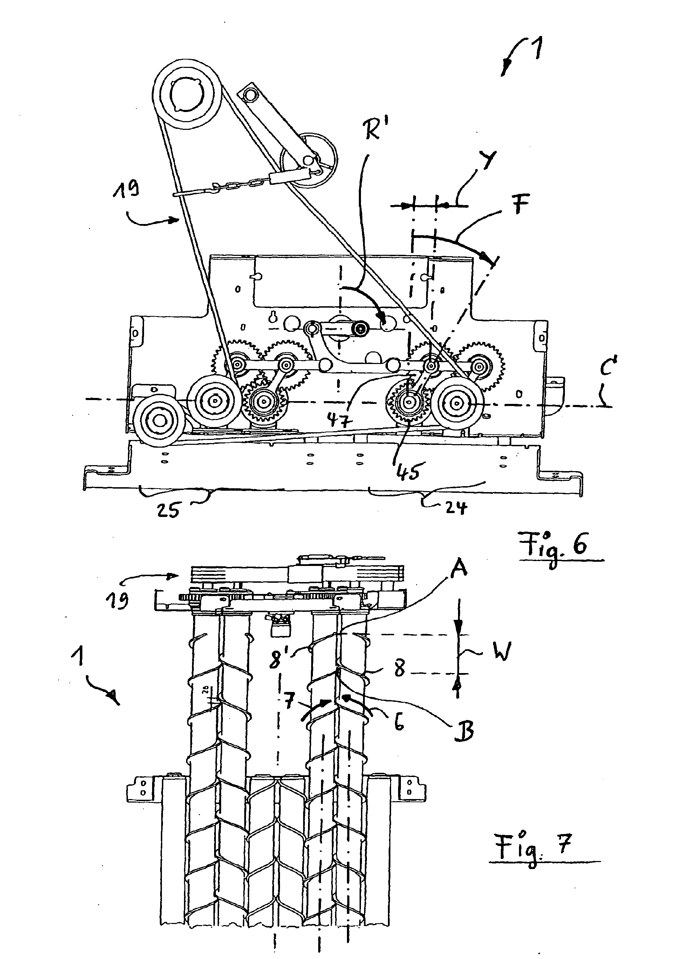

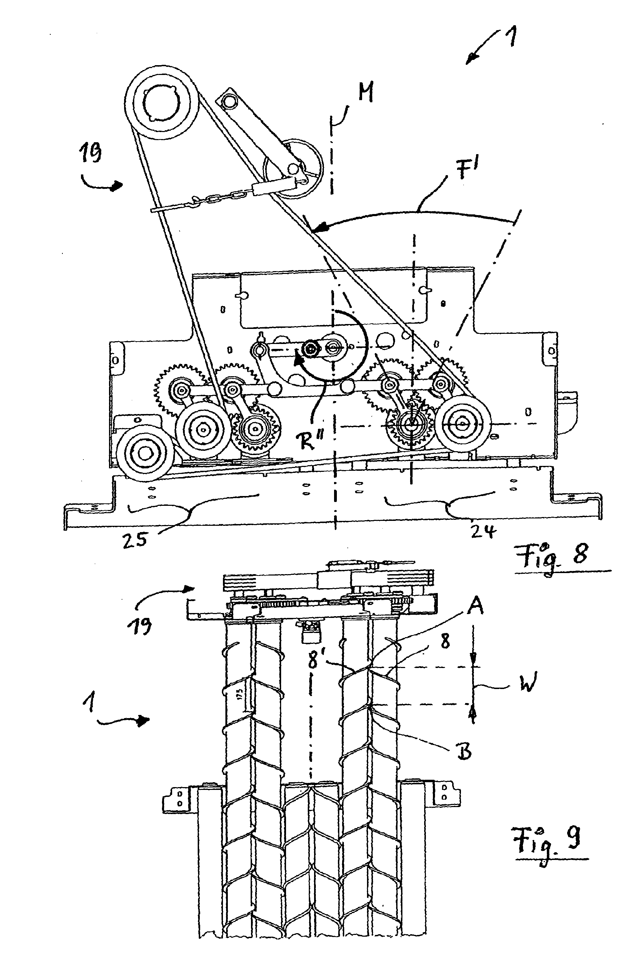

Eine Zusammenschau von Fig. 3, Fig. 7 und Fig. 9 verdeutlicht diese für die innovative Zwangsreinigung Z entscheidende Bewegungskomponente. Bezogen auf das hier allein betrachtete Profil 8 (Fig. 3) wird dieses ausgehend von einer zum Profil 8' hin definierten Mittellage P zwischen den beiden Extrempunkten B (Fig. 7) und A (Fig. 9) in der Wirkzone W axial "verschoben", so dass damit die zusätzlich zur radialen Komponente (Drehung 6, 7) erforderliche axiale Abriebkomponente zur Zwangsreinigung in das System eingeleitet wird.

Ausgehend von einer dem Punkt P entsprechenden Mittelstellung des Zusatzantriebes 27 bzw. des Stellantriebes 20 gemäß Fig. 5 wird der Steuerungsablauf des Systems in den gemäß Fig. 6 und Fig. 8 gezeigten Bewegungsphasen deutlich. Mittels einer Schwenkverstellung R' der Kurbel 41 werden die beiden Zahnradgetriebe 24 und 25 in die erste Endstellung A gebracht. Anhand des beispielhaft hervorgehobenen Getriebes 24 in Fig. 6 wird eine von der Schubstange 43 (Schubweg Y, Fig. 6) ausgehende bogenförmige Verlagerung F des Stellzahnrades 47 verdeutlicht. Das Stellzahnrad 47 beeinflusst bei dieser Verlagerung F das Antriebszahnrad 45 des zugeordneten Walzenkörpers derart, dass dessen Mitnahmeprofil 8' relativ zum Profil 8 des nebengeordneten Walzenkörpers bis in eine erste der "Endstellungen" (Punkt A) phasenverschoben wird. Eine Fortsetzung der Drehbewegung des Systems gemäß Pfeil R" (Fig. 8) führt dazu, dass die vorbeschriebene Relativbewegung zwischen den beiden Profilen 8 und 8' mit entgegengesetzter Richtung in der Wirkzone W bis zur zweiten "Endstellung" (Lage B, Fig. 7) hin fortgesetzt wird und sich dieser Bewegungsablauf durch ständige Wiederholung auf die Zwangsreinigung Z abbildet.

Zur Vervollständigung des vorbeschriebenen Antriebskonzeptes dieses die Zwangsreinigung Z aufweisenden Axialwalzentisches 1 wird noch auf die Getriebeverbindung 21' auf der der Antriebsseite gegenüberliegenden Stützzone verwiesen. In Fig. 10 ist dabei gezeigt, dass die beiden zentralen Walzenkörper 11 und 12 des ersten Walzenkörper-Paares indirekt durch jeweilige auf deren Zahnräder 31 und 31' einwirkende, angetriebene Zahnräder 52 und 53 verbunden sind.

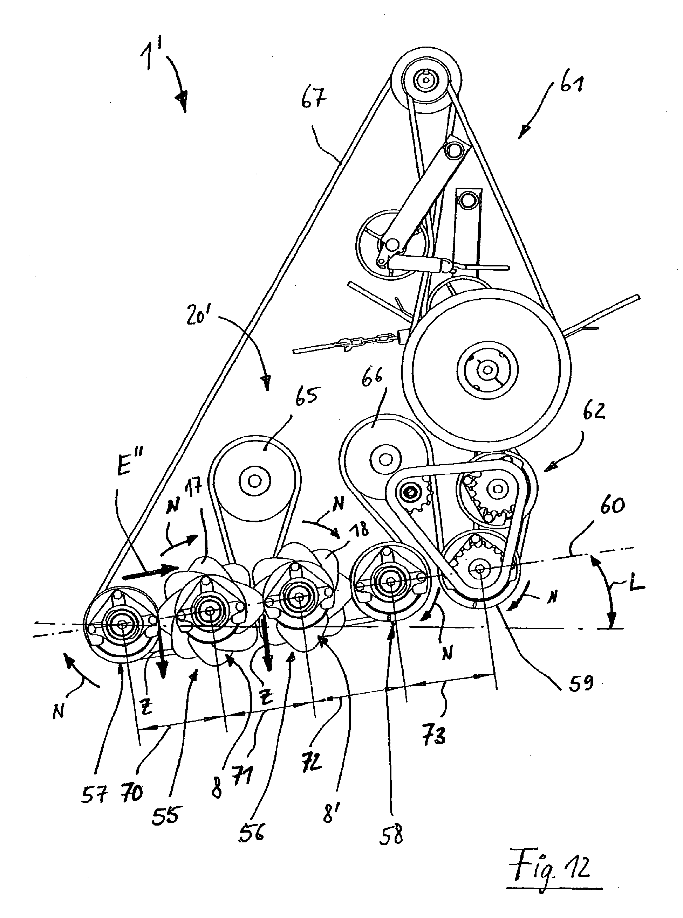

In Fig. 11 ist eine zweite Ausführung der erfindungsgemäßen Vorrichtung dargestellt, wobei diese in axialer Ausrichtung quer zur Förderrichtung E" des Gemisches G verlaufende Walzenkörper 55, 56 mit der Zwangsreinigung Z (Fig. 12) aufweist, die eine Trennstrecke 2' nach Art eines Querwalzentisches 1' bilden. Diese Ausführung des Querwalzentisches 1' weist prinzipiell die bereits vorstehend beschriebenen Wirkkomponenten zur Erzeugung der Zwangsreinigung Z auf, wobei insbesondere die konstruktive Auslegung der Walzenkörper bzw. deren Profile 8, 8' ähnlich der Ausführung in Fig. 1 vorgesehen ist.

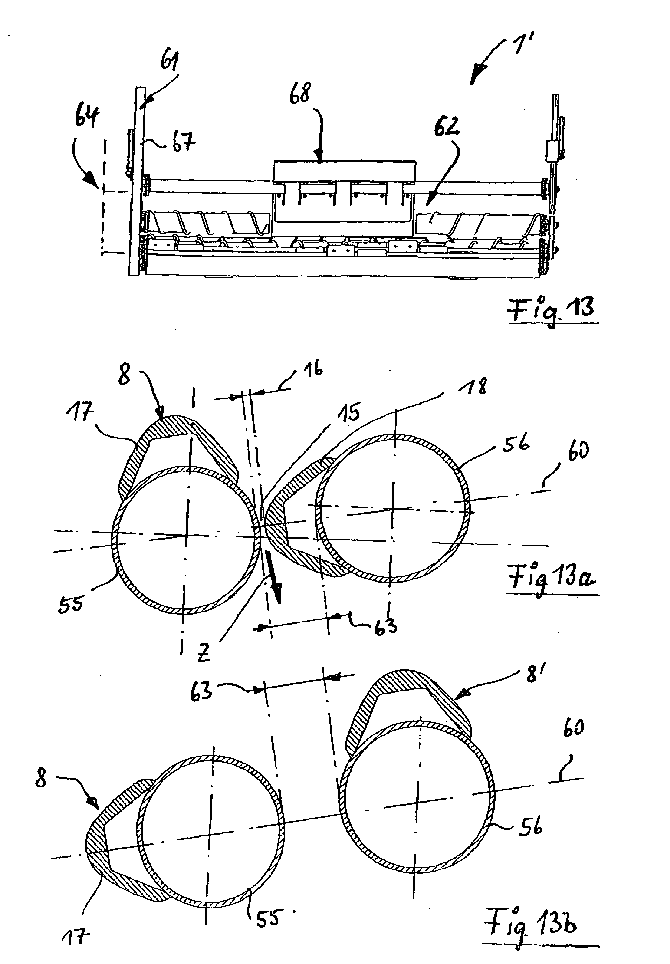

Für die Verlagerung des Transportgutes in Förderrichtung E" weist diese Trennstrecke 2' einen Förderantrieb 61 auf, mittels dem sämtliche der Walzenkörper 55 und 56 bzw. Zusatzwalzen 57 bis 59 im Bereich der Trennstrecke 2' mit einer gleichsinnigen Drehbewegung gemäß Pfeil N (Fig. 12) antreibbar sind. Die Seitenansicht des Querwalzentisches 1' gemäß Fig. 12 zeigt auch, dass sämtliche der Walzenkörper 55 bis 59 in einer geneigten Förderebene 60 (Winkel L) angeordnet sind. In Anpassung an die vorgesehene Zwangsreinigung Z und die Ausbildung der Mitnahmeprofile 8, 8" sind ausgehend vom Achsabstand 71 auch die Achsabstände 70, 72 und 73 vorgebbar bzw. können diese einzeln oder gemeinsam produktspezifisch oder den Bodenverhältnissen entsprechend eingestellt werden. In vorteilhafter Weiterbildung dieses Querwalzentisches 1' weist dieser am Ende der Trennstrecke 2' einen speziellen Auslassförderer 62 auf (Fig. 13 bzw. Fig. 20 bis 22).

In den vergrößerten Ausschnittsdarstellungen gemäß Fig. 13a und 13b wird deutlich, dass auf den Walzenkörpern 55, 56 als Mitnahmeprofile 8, 8' die jeweiligen Segmente 17 und 18 angeordnet sind, so dass ein gemeinsamer Siebspalt 63 gebildet ist (weitgehend entsprechend dem Siebspalt 5 in Fig. 2). Für die analog der Ausführung in Fig. 1 ablaufende Zwangsreinigung Z (Fig. 2) sind im Bereich der Segmente 17, 18 bzw. der beiden Walzenkörper 55, 56 die Scherzonen 15 im Reinigungsspalt 16 gebildet (Fig. 13a), so dass die Zusammenschau von Fig. 13a und 13b die phasen- bzw. abschnittsweise auf dem Umfang der Segment-Walzen erfolgende Zwangsreinigung deutlich wird.

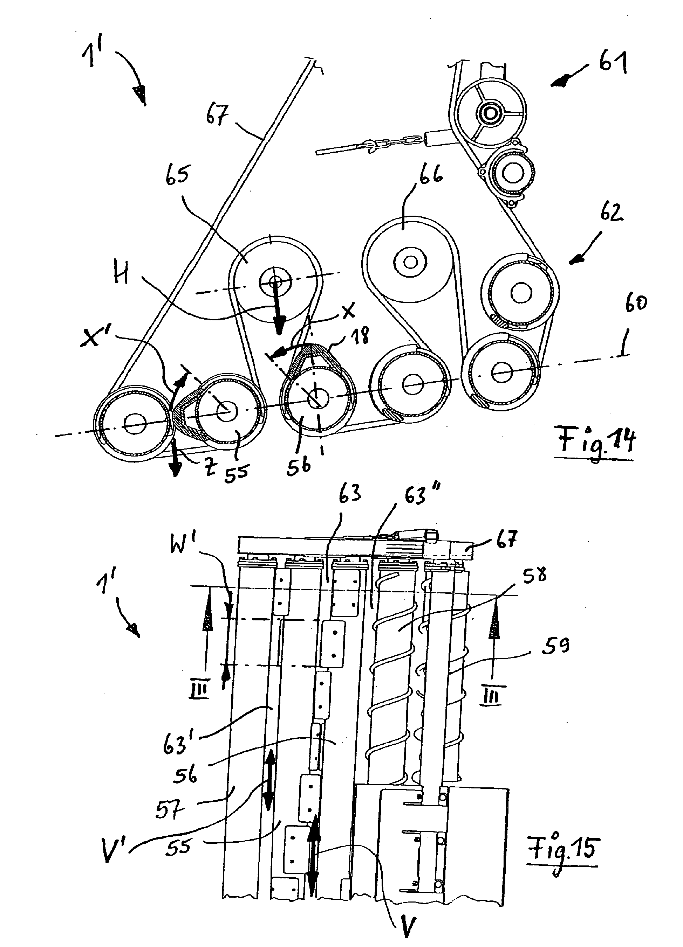

Die Draufsicht gemäß Fig. 15 zeigt in Zusammenschau mit Fig. 12, dass die als Mitnahmeprofil 8, 8' wirksamen Segmente 17, 18 auch zu den nebengeordneten Walzenkörpern 57 bzw. 58 jeweilige Siebspalte 63' bzw. 63" bilden können und aus der Darstellung gemäß Fig. 11 ergibt sich auch, dass die Segmente 17, 18 für die vorgesehenen Phasen der Zwangsreinigung schraubenlinienförmig mit entsprechend variabler Steigung auf den Walzenkörpern 55, 56 verlaufen (Linie Q, Fig. 11).

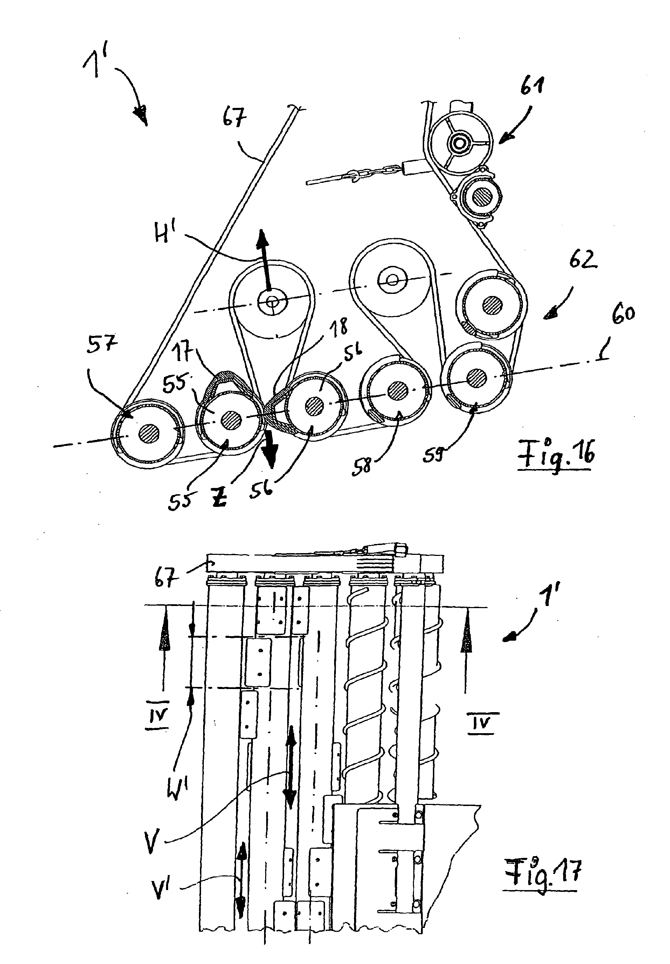

Für die Phasenverstellung der Reihen von Segmenten 17, 18 benachbarter Walzenkörper ist im Bereich des Querwalzentisches 1' als zusätzlicher Stellantrieb ein in den Förderantrieb 61 integriertes Hub-Stellorgan vorgesehen. In einfachster Ausführung ist als dieses Hub-Stellorgan zumindest eine im wesentlichen linear höhenverlagerbar am Maschinenrahmen 64 (Fig. 13) gehaltene Umlenkrolle 65, 66 vorgesehen (Hubbewegung H, H', Fig. 14 bzw. Fig. 16). In der dargestellten Ausführung werden sämtliche rotierenden Teile durch den umlaufenden Keilriemen 67 angetrieben.

Ausgehend von der in Fig. 14 dargestellten oberen Endstellung (Fig. 15, Wirkzone W': offen) kann die Umlenkrolle 65 in Hubrichtung H so nach unten verlagert werden, dass (gleichzeitig mit der Drehbewegung N) das Segment 18 in einer Schwenkrichtung X relativ zum Siebspalt 63 hin verschwenkt wird. Dies geschieht kontinuierlich so lange, bis die in Fig. 16 dargestellte (Fig. 13a entsprechende) Schwenkstellung als "geschlossene" Lage in der Wirkzone 15 erreicht ist. Danach erfolgt ein entsprechender Rückhub H' gemäß Fig. 16 bis in die Ausgangsstellung gemäß Fig. 14. Diese an dem einzelnen Segment 18 beschriebene "Stellbewegung" in Form der Phasenverstellung erfolgt in Längsrichtung der Walzenkörper 55 und 56 an diesen gleichzeitig, so dass damit die Wirkzonen W' mit den verengten Scherzonen 15 auch in Längsrichtung (Pfeil V, Fig. 11) bzw. in Axialrichtung "wandert". Auch die Schwenkbewegungen der benachbarten Walzenkörper 55, 56 sind entsprechend H und H' gegenläufig (Pfeil X', Fig. 14), so dass dieser Wirkzusammenhang die radialen und axialen Abriebkomponenten mit der nach Art eines Schälvorgangs definierbaren Zwangsreinigung Z bildet. In Fig. 15 und 17 sind die geometrischen Verhältnissen innerhalb des Siebspaltes 63 gezeigt, die zur Zwangsreinigung die jeweiligen Wirkzonen W' definieren.

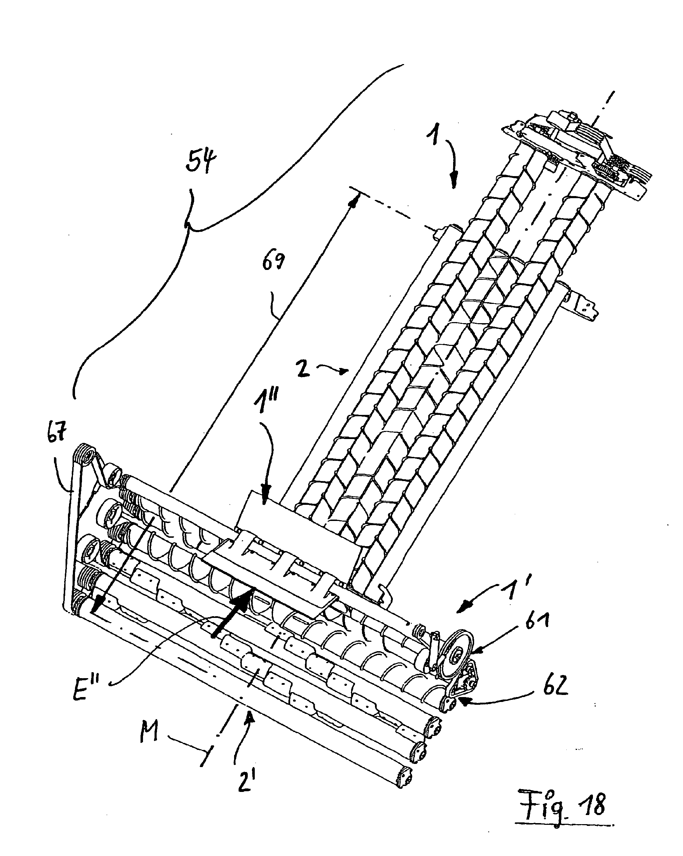

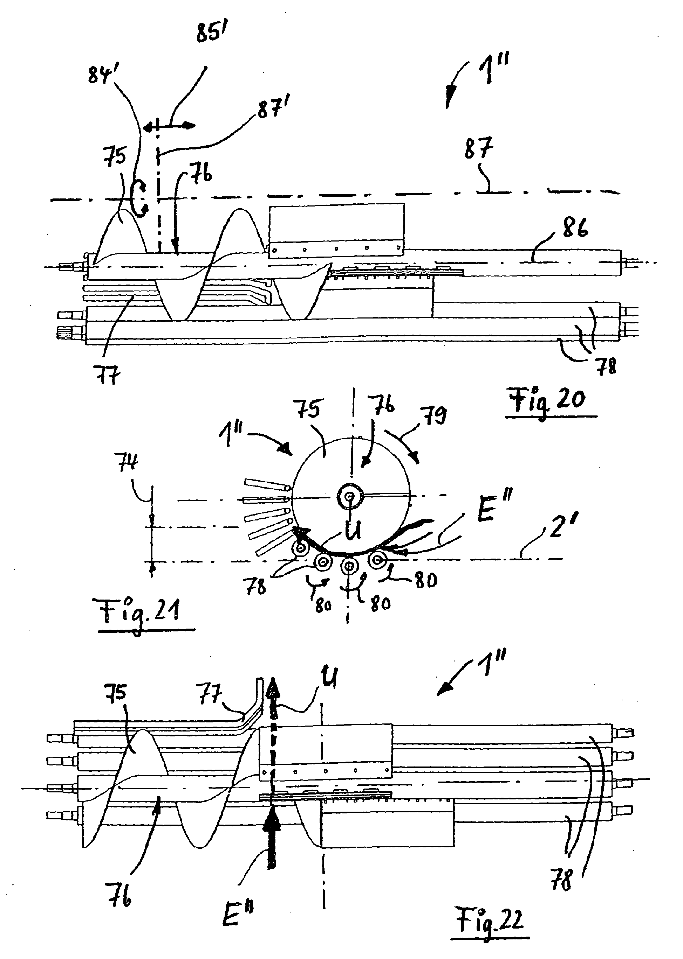

In Fig. 18 ist ein erweitertes Konzept einer insgesamt mit 54 bezeichneten Vorrichtung dargestellt, wobei eine Gesamttrennstrecke 69 aus jeweiligen Teilbereichen 2 und 2' des Axialwalzentisches 1 und des Querwalzentisches 1' gebildet ist. Dabei ist als Auslassförderer 62 zwischen den beiden Teilbereichen 2, 2' eine das Fördergut E" von der Trennstrecke 2' übernehmende und eine vertikale Umlenkung U (Fig. 20 bis 25) bewirkende Trenn- und Fördervorrichtung 1" vorgesehen.

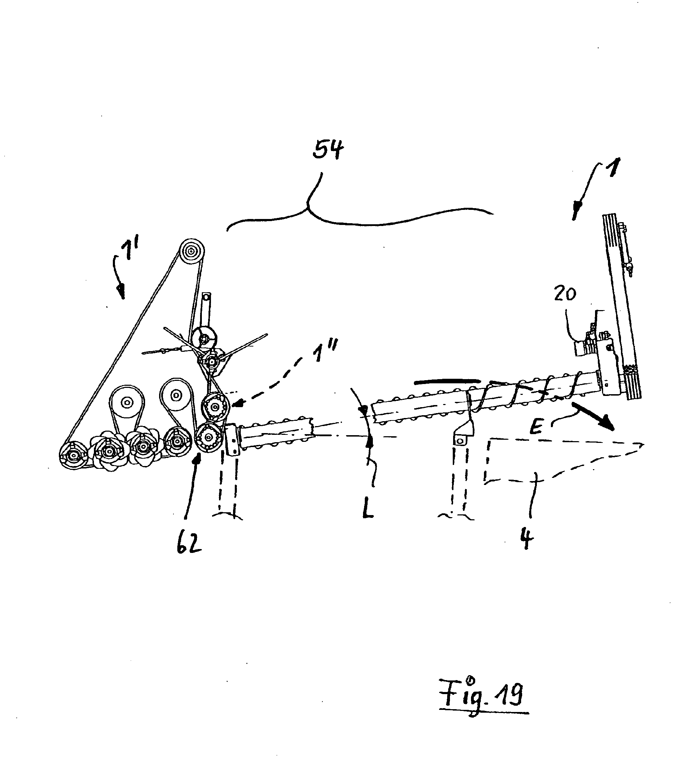

In Fig. 19 ist dieses Verbundsystem 54 in einer Seitenansicht veranschaulicht, wobei deutlich wird, dass auch der Axialwalzentisch 1 eine der Neigung L entsprechende Förderstrecke bilden kann, die das Fördergut E auf der Entnahmevorrichtung 4 ausfördert.

In den Darstellungen gemäß Fig. 20 bis 22 ist die Trenn- und Fördervorrichtung 1" als eine autarke Baugruppe dargestellt, die einen beispielsweise auf einem Teilbereich 2' (Fig. 21) zugeförderten Strom des Erntegutes E" aufnimmt und diesen mit vertikaler Umlenkung U mit einem Höhenabstand 74 weiterfördert. In dieser Bewegungsphase wird das Erntegut E" von einer jeweilige Mitnahmewendeln 75, 75' aufweisenden Walze 76 erfasst und im zentralen Bereich der Vorrichtung 1" über Leitelemente 77 in die Abgaberichtung gelenkt (Fig. 22). In dieser Förderphase wirkt die Reinigungswalze 76 mit jeweiligen den Endbereich dieser Förderstrecke 2' bildenden und mit Abstand zueinander angeordneten Glattwalzen 78 zusammen, die entgegen der Drehrichtung 79 der Walze 76 in einer Drehrichtung 80 gleichsinnig umlaufen.

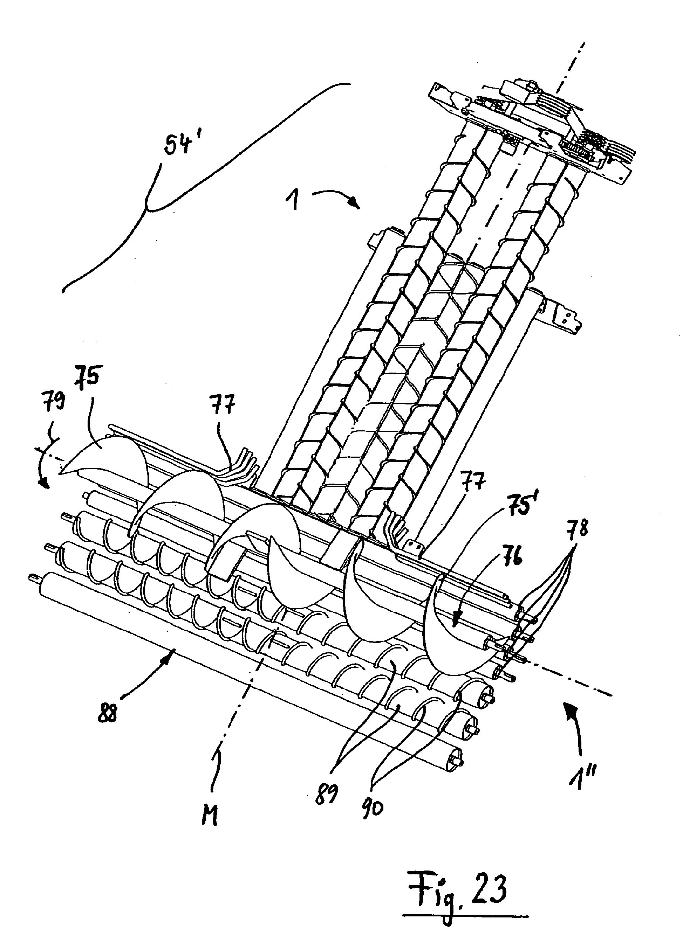

Die vorteilhafte Anwendung dieser Trenn- und Fördervorrichtung 1" in dem Maschinenkonzept 54 ist den Darstellungen gemäß Fig. 23 bis 25 zu entnehmen (ähnlich Fig. 18, ohne sämtliche Details nochmals mit Bezugszeichen zu versehen). Entsprechend der Wirkungsbeschreibung zu Fig. 20 bis 22 wird in Fig. 23 deutlich, dass die in Drehrichtung 79 umlaufende Walze 76 mit zwei gegenläufige Steigungen aufweisenden Abschnitten von Wendeln 75 und 75' versehen ist, mit denen eine konzentrierte Weiterleitung des Fördergutes E" im zentralen Bereich zu den Leitelementen 77 hin erreicht ist.

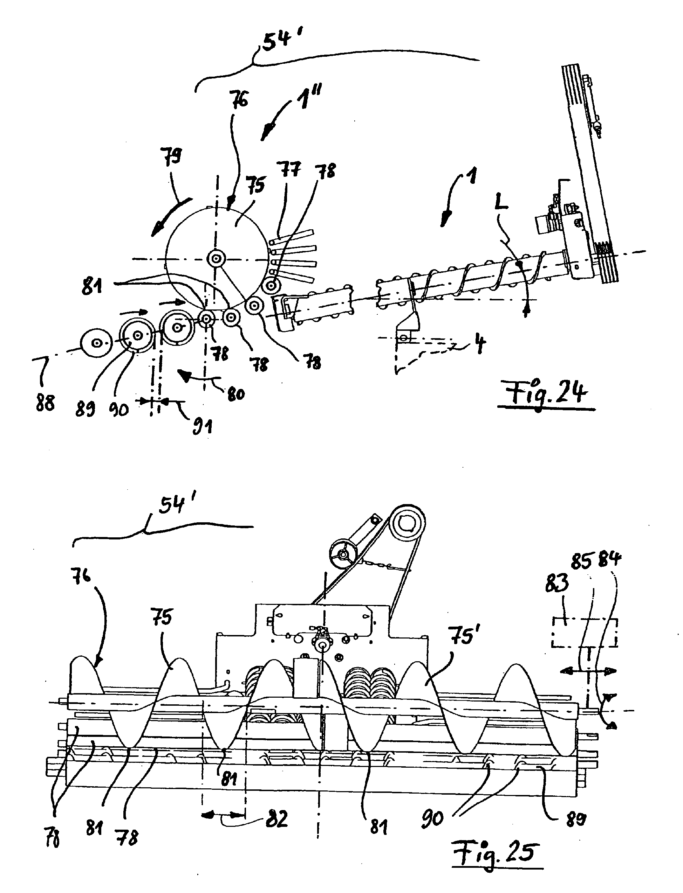

Auch bei dieser Vorrichtung 1" wird das bereits in den Ausführungsformen der Vorrichtung 1 und 1' beschriebene Prinzip der Zwangsreinigung Z realisiert, wobei hier insbesondere mittels der (im Vergleich mit den Mitnahmeprofilen 8, 8') eine weite Steigung aufweisenden Wendeln 75, 75' eine Zwangsreinigung nach Art eines "Schälprozesses" an jeweiligen Berührungspunkten 81 mit den Glattwalzen 78 erreicht wird (Fig. 24, Fig. 25). Eine vollflächige Zwangsreinigung der Glattwalzen 78 kann dabei bereits dadurch erreicht werden, dass diese jeweils einzeln unterschiedliche Drehzahlen bzw. Umfangsgeschwindigkeiten in Bezug auf die Walze 76 aufweisen, damit jeweilige die Zwangsreinigung bewirkende Anlagepunkte 81 axial über den Außenumfang der jeweiligen Glattwalzen 78 "wandern" (Pfeil 82, Fig. 25) und diese auf der gesamten Länge gesäubert werden. Ebenso ist denkbar, dass die Walze 76 mit einem zusätzlichen Antrieb 83 (Fig. 25, schematisch) versehen wird, mit dem eine radiale Phasenverstellung 84 und/oder eine axiale Schubverstellung 85 so durchführbar ist, dass eine vollumfängliche Zwangsreinigung der Glattwalzen 78 erreicht ist und damit dieser Bereich der Reinigungsstrecke ohne Hilfsmittel sauber gehalten werden kann.

Eine Erweiterung dieses Zwangsreinigungs-Konzeptes im Bereich der Glattwalzen 78 und der Walze 76 mit dem als jeweilige Wendel 75 bzw. 75' ausgebildeten Mitnahmeprofil ist dadurch denkbar, dass parallel zur Drehachse 86 der Walze 76 (Fig. 20) in einer schematisch dargestellten Achse 87 eine der Walze 76 weitgehend entsprechende "Reinigungs"-Walze (nicht dargestellt) zugeordnet wird. Diese Walze bzw. deren mit einer Strich-Punkt-Linie angedeutetes Profil 87' kann durch entsprechende axiale Verlagerung (Pfeil 85') bzw. radiale Phasenverstellung (Pfeil 84') so beeinflusst werden, dass die Zwangsreinigung - ähnlich dem Wirkprinzip der Vorrichtung 1 - gemeinsam mit der Walze 76 realisiert wird.

Die Zusammenschau von Fig. 23 und 24 zeigt, dass vor der Trenn- und Fördervorrichtung 1" eine Förderstrecke 88 in an sich bekannter Ausführung vorgesehen ist, bei der die Transportwalzen 89 (mit jeweiligen Spiral-Mitnehmern 90) den bisher im Stand der Technik üblichen Siebspalt 91 aufweisen, wobei dieser eine Zwangsreinigung gerade nicht verwirklicht. Mit dieser Förderstrecke 88 wird deutlich, dass die eine jeweilige Zwangsreinigung Z aufweisenden Vorrichtungen 1, 1' und 1" mit einer Vielzahl weiterer Baugruppen und Fördersysteme kombinierbar sind.

Mit sämtlichen vorbeschriebenen Vorrichtungen 1, 1', 1" bzw. den komplexen Baueinheiten 54, 54' sind konstruktive Varianten gezeigt, bei denen jeweils das neue Verfahren zur Trennung von Erntegut und Beimengungen mit sich unmittelbar reinigenden Trennwalzen verwirklicht ist. Es ist zwar aus der Vielzahl von bereits im Stand der Technik zitierten Lösungen /1/ bis /12/ bekannt, ein Rodungsgemisch aus Hackfrüchten mit Steinen, Kluten, Erdbestandteilen u. dgl. Beimengungen auf Trennwalzen aufweisende Trennstrecken aufzugeben, dabei zumindest einen Teil der Beimengungen durch einen Sortierspalt auszutragen und eine oberseitige Weiterleitung des Erntegutes zu bewirken - aber bei keiner dieser zitierten Lösungen können die Trennwalzen während des Trennvorganges unmittelbar und vollständig gereinigt bzw. von sich anlagernden Beimengungen freigehalten werden.

Mit der vorstehend an Hand von mehreren Ausführungsbeispielen beschriebenen unmittelbaren Zwangsreinigung Z wird ein für die landwirtschaftliche Erntetechnik überraschend effizientes Verfahren vorgeschlagen, das auf weitgehend beliebigen Erntevorrichtungen einsetzbar ist. Dieses Verfahren zeichnet sich dadurch aus, dass den im Siebspalt zusammenwirkenden Mitnahmeprofilen der Trennwalzen zusätzlich zu den an sich bekannten zwei Förder-Drehbewegungen eine als axial bzw. radial versetzte Relativbewegung wirksame Komponente überlagert und damit dem System eine "Reinigungsphase" vermittelt wird. Dabei werden im gemeinsamen Sortierspalt der Trennwalzen jeweilige Scherzonen gebildet, in denen die in Eingriff befindlichen Profile die Zwangsreinigung nach Art eines Schälprozesses bewirken. Dieser steuerbare Reinigungsvorgang ist damit als ein mechanisch abrasives System in den eigentlichen Förder- und Trennvorgang des Gemisches integriert.

Diese Zwangsreinigung Z mittels entsprechender Reib-, Schäl- und Scherkräfte am Umfang der Trennwalzen wird durch einen (relativen) Axial- und/oder Radialvorschub der "kämmenden" Profile realisiert, wobei diese Vorschubkomponente durch unterschiedliche konstruktive Lösungen in das System bzw. dessen Steuerung eingeleitet werden können. Denkbar ist dabei, weitgehend beliebige Stell-, Schwenk-und/oder Schubantriebe so in das System zu integrieren, dass wahlweise auch nur für eine kurzzeitige Reinigungsphase die Zwangsreinigung Z zugeschaltet werden kann.

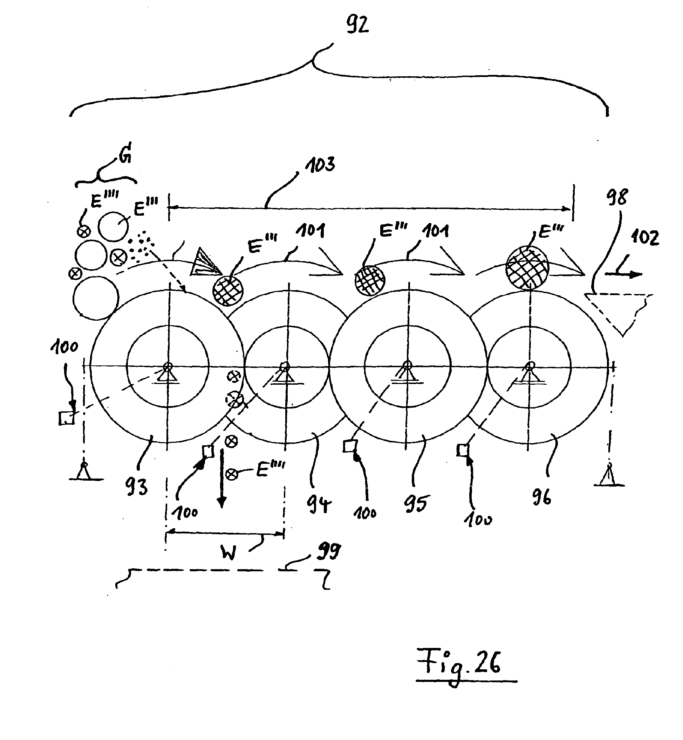

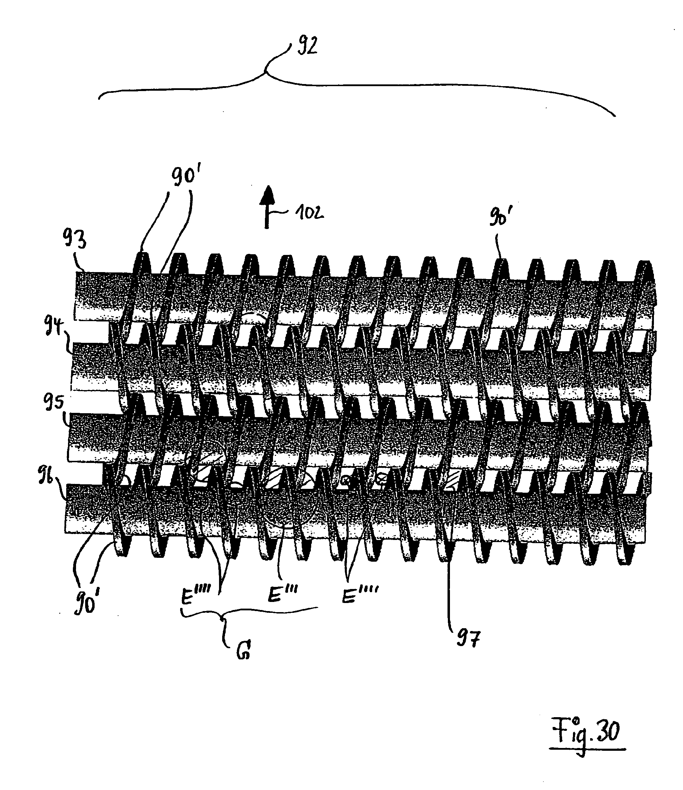

In Fig. 26 bis 30 ist die Anwendung der erfindungsgemäßen Förder- und Trennvorrichtung in Form einer separaten Fraktioniereinheit 92 zum Sortieren von insbesondere im Gemisch G enthaltenen Kartoffeln (Emtegut E''', E"") dargestellt, wobei diese entsprechend ihrer Größe auf einer Reinigungsstrecke 103 zu einer Entnahmestelle 98 verlagert oder in kleinerer Auswahl einer unteren Ablage 99 zugeführt werden.

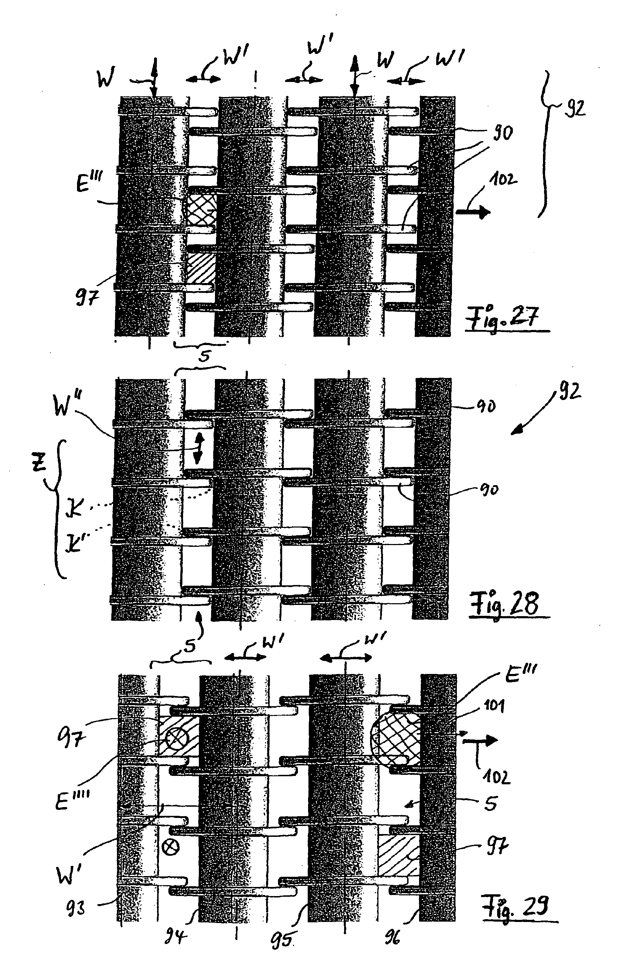

Bei dieser in eine Sortieranlage integrierten Fraktioniereinheit 92 erfolgt auf Basis von (bereits für die vorbeschriebene Zwangsreinigung Z vorgesehenen) Einstellmöglichkeiten im Bereich jeweiliger Dreh- und/oder Schubbaugruppen 100 eine Optimierung des Sortiervorgangs im Bereich des Siebspaltes 5. Dabei ist ein im Siebspalt 5 vorgebbarer Durchlassbereich 97 (Fig. 27, schraffierte Fläche) durch entsprechende Verstellung in axialer Richtung W bzw. radialer Richtung W' zwischen einer minimalen Durchlassgröße (Fig. 27) und einer maximalen Durchlassgröße (Fig. 29) variabel auf die beabsichtigte Sortieraufgabe einstellbar, so dass die Sortierung der entsprechende Größe aufweisenden Kartoffeln E''' (wird in Pfeilrichtung 101, 102 weiterbewegt) und E"" (fällt durch den Spalt 5) erreicht wird. Diese Verstellmöglichkeit W, W' können sowohl an scheibenförmigen Trennelementen 90 als auch an spiralförmigen Trennelementen 90' realisiert werden.

In Fig. 28 ist mit dem Pfeil W" die axiale Bewegung bei einer Zwangsreinigung des Systems dargestellt, wobei in Bereichen K, K' die Abreinigung der Trennwalzen 93, 94, 95, 96 erfolgt.

## Patentansprüche

1. Förder- und Trennvorrichtung für Hackfrüchte, mit einer ein Gemisch (G) aus Kartoffeln, Rüben o. dgl. Erntegut sowie Steinen, Kluten u. dgl. Beimengungsteilen aufnehmenden Trennstrecke (2) mit zumindest zwei rotierend angetriebenen Trennwalzen (3), auf denen oberseitig im wesentlichen das Erntegut (E) weiterleitbar ist und dabei durch einen in einer Siebphase zwischen den Trennwalzen (3) wirksamen Siebspalt (5) im wesentlichen Beimengungen (G') austragbar sind, **dadurch gekennzeichnet, dass** die Trennwalzen (3) durch eine unmittelbare Zwangsreinigung (Z) zumindest von anhaftbaren Teilen des Gemisches (G) freihaltbar sind, derart, dass zumindest ein an den Trennwalzen (3) vorgesehenes Mitnahmeprofil (8, 8') einen radialen und axialen Abtrageffekt im Siebspalt (5) bewirkt.

2. Förder- und Trennvorrichtung nach Anspruch 1, **dadurch gekennzeichnet, dass** die Zwangsreinigung (Z) im Bereich des Siebspaltes (5) erfolgt.

3. Förder- und Trennvorrichtung nach Anspruch 1 oder 2, **dadurch gekennzeichnet, dass** die Zwangsreinigung (Z) permanent in der Siebphase durchführbar ist.

4. Förder- und Trennvorrichtung nach einem der Ansprüche 1 bis 3, **dadurch gekennzeichnet, dass** zwischen paarweise zusammenwirkenden Trennwalzen (3) haftende und/oder anhaftbare Teile des zugeführten Gemisches (G) mit der Zwangsreinigung (Z) erfassbar sind.

5. Förder- und Trennvorrichtung nach einem der Ansprüche 1 bis 4, **dadurch gekennzeichnet, dass** im Siebspalt (5) gleichzeitig jeweilige Zwangsreinigungs- und Siebphasen durch in Richtung der Trennstrecke (2) versetzte Wirkzonen (W) definierbar sind.

6. Förder- und Trennvorrichtung nach einem der Ansprüche 1 bis 5, **dadurch gekennzeichnet, dass** als Trennwalzen (3) an sich bekannte und ein umfangsseitiges Mitnahmeprofil (8, 8') aufweisende Walzenkörper (9, 10, 11, 12, 13, 14) vorgesehen sind und diese sowohl zur Weiterleitung (E) und Trennung (G') der Gemischteile als auch zur unmittelbaren, permanenten Zwangsreinigung (Z) des Siebspaltes (5) paarweise zusammenwirken.

7. Förder- und Trennvorrichtung nach einem der Ansprüche 1 bis 6, **dadurch gekennzeichnet, dass** die paarweise angeordneten Walzenkörper (9, 10; 11, 12; 13, 14) radial und/oder axial zusammenführbare Mitnahmeprofile (8, 8') aufweisen, diese in dem als lichte Weite zwischen den Walzenkörpern definierten Siebspalt (5) zusammenwirken und in diesem zumindest ein Scherzonen (15) mit die Zwangsreinigung (Z) bewirkendem Reinigungsspalt (16) vorgebbar ist.

8. Förder- und Trennvorrichtung nach einem der Ansprüche 1 bis 7, **dadurch gekennzeichnet, dass** die einen kämmenden Eingriff aufweisenden Mitnahmeprofile (8, 8') der paarweise gegensinnig drehenden Walzenkörper (9, 10; 11, 12; 13, 14) eine in den Scherzonen (15) nach Art eines mechanisch abrasiven oder schälenden Systems wirksame Zwangsreinigung (Z) bilden.

9. Förder- und Trennvorrichtung nach einem der Ansprüche 1 bis 8, **dadurch gekennzeichnet, dass** durch eine axiale Verlagerung der Walzenkörper (9, 10, 11, 12, 13, 14) relativ zueinander und/oder deren radiale Schwenkverstellung jeweilige die Walzenlängen erfassende sowie vollständig radial umlaufende Scherzonen (15) mit Reinigungsspalt (16) gebildet sind.

10. Förder- und Trennvorrichtung nach einem der Ansprüche 1 bis 9, **dadurch gekennzeichnet, dass** in den Reinigungsspalt (16) gelangende anhaftbare Teile des Gemisches (G) im Bereich der als kontinuierliche Reinigungsglieder wirksamen Mitnahmeprofile (8, 8') sowohl von deren Kontur als auch vom Umfang der Walzenkörper (9, 10, 11, 12, 13, 14) abstreifbar sind.

11. Förder- und Trennvorrichtung nach einem der Ansprüche 1 bis 10, **dadurch gekennzeichnet, dass** die Mitnahmeprofile (8, 8') entsprechend ihrer Geometrie, Anordnung und/oder Kontur jeweilige variabel vorgebbare Reinigungsspalte (16) bilden.

12. Förder- und Trennvorrichtung nach einem der Ansprüche 1 bis 11, **dadurch gekennzeichnet, dass** die Mitnahmeprofile (8, 8') wendelförmig über dem Umfang der Walzenkörper (9, 10, 11, 12, 13, 14) verlaufen.

13. Förder- und Trennvorrichtung nach Anspruch 12, **dadurch gekennzeichnet, dass** die wendelförmigen Profilkörper benachbarter Walzenkörper (9, 10) mit gegenläufiger Steigung (S, S') verlaufen.

14. Förder- und Trennvorrichtung nach Anspruch 12 oder 13, **dadurch gekennzeichnet, dass** die Walzenkörper (9, 10, 11, 12, 13, 14) mit den die Reinigungsspalte (16) bildenden Mitnahmeprofilen (8, 8') einstückig ausgebildet sind.

15. Förder- und Trennvorrichtung nach Anspruch 12 oder 13, **dadurch gekennzeichnet, dass** die wendelförmigen Mitnahmeprofile (8, 8') aus Segmenten (17, 18) zusammengesetzt sind.

16. Förder- und Trennvorrichtung nach einem der Ansprüche 1 bis 13, **dadurch gekennzeichnet, dass** die Mitnahmeprofile (8, 8') als einen axialen Abstand auf dem Walzenkörper (9, 10, 11, 12, 13, 14) aufweisende Fingerprofile ausgebildet sind.

17. Förder- und Trennvorrichtung nach einem der Ansprüche 1 bis 16, **dadurch gekennzeichnet, dass** die Vorrichtung (1, 1') im Bereich der als das zumindest eine Paar zusammenwirkenden und mittels eines an sich bekannten Förderantriebes (19) antreibbaren Walzenkörper (9 bis 14) zumindest einen Stellantrieb (20) aufweist, mit dem zumindest einer der Walzenkörper zusätzlich radial und/oder axial verlagerbar ist.

18. Förder- und Trennvorrichtung nach Anspruch 17, **dadurch gekennzeichnet, dass** der Förderantrieb (19) und der zumindest eine Stellantrieb (20) gleichzeitig zuschaltbar sind, derart, dass an den Walzenkörper-Paaren die Zwangsreinigung (Z) im Bereich der Mitnahmeprofile (8, 8') aktivierbar ist.

19. Förder- und Trennvorrichtung nach Anspruch 17 oder 18, **dadurch gekennzeichnet, dass** zusätzlich zum Förderantrieb (19) mehrere Stellantriebe vorgesehen sind.

20. Förder- und Trennvorrichtung nach einem der Ansprüche 17 bis 19, **dadurch gekennzeichnet, dass** der Förderantrieb (19) gleichzeitig mit dem radialen und dem axialen Stellantrieb wirksam ist.

21. Förder- und Trennvorrichtung nach einem der Ansprüche 17 bis 20, **dadurch gekennzeichnet, dass** an mehreren zusammenwirkenden Paaren von Walzenkörpern ein gemeinsamer Stellantrieb (20) mittels einer Getriebeverbindung (21) wirksam ist, derart, dass deren jeweilige Mitnahmeprofile (8, 8') durch eine Schwenk- und/oder Schubverstellung die radiale und axiale Zwangsreinigung (Z) bewirken.

22. Förder- und Trennvorrichtung nach einem der Ansprüche 17 bis 21, **dadurch gekennzeichnet, dass** der Stellantrieb (20) und die Getriebeverbindung (21) endseitig an den Walzenkörpern vorgesehen sind.

23. Förder- und Trennvorrichtung nach einem der Ansprüche 1 bis 22, **dadurch gekennzeichnet, dass** diese mit in axialer Ausrichtung parallel zur Förderrichtung (E) des Gemisches (G) verlaufenden Walzenkörpern eine Trennstrecke (T) nach Art eines Axialwalzentisches bildet.

24. Förder- und Trennvorrichtung nach Anspruch 23, **dadurch gekennzeichnet, dass** der Axialwalzentisch in einer weitgehend spiegel symmetrischen Anordnung ausgehend von seiner zwischen einem ersten Walzenkörper-Paar (11, 12) verlaufenden Mittellängsebene (M) nebengeordnet sowohl ein zweites als auch ein drittes Walzenkörper-Paar (9, 10; 13, 14) mit jeweils gegensinnig umlaufenden Walzenkörpern aufweist.

25. Förder- und Trennvorrichtung nach Anspruch 23 oder 24, **dadurch gekennzeichnet, dass** die jeweils mit gegensinnig zum Siebspalt (5) hin umlaufenden Mitnahmeprofilen (8, 8') versehenen Walzenkörper-Paare auch zum nebengeordneten Paar hin jeweils einen einen Siebspalt (5') bildenden Abstand (D) aufweisen.

26. Förder- und Trennvorrichtung nach einem der Ansprüche 23 bis 25, **dadurch gekennzeichnet, dass** dem zweiten und dem dritten Walzenkörper-Paar (9, 10; 13, 14) jeweils außenseitig als Trennelement eine zusätzliche Glattwalze (22, 23) zugeordnet ist.

27. Förder- und Trennvorrichtung nach einem der Ansprüche 23 bis 26, **dadurch gekennzeichnet, dass** die drei Walzenkörper-Paare einenends im Bereich des Stellantriebs (20) jeweilige das zweite sowie das dritte Paar (9, 10; 13, 14) direkt erfassende Zahnradgetriebe (24, 25) aufweisen und diese mit einem eine Gestängebaugruppe (26) aufweisenden Zusatzantrieb (27) verbindbar sind.

28. Förder- und Trennvorrichtung nach einem der Ansprüche 23 bis 27, **dadurch gekennzeichnet, dass** die drei Walzenkörper-Paare gegenüberliegend dem Stellantrieb (20) durch zwei mittig im Bereich der Mittellängsebene (M) geteilte Zahnradsätze (28, 29) verbunden sind.

29. Förder- und Trennvorrichtung nach einem der Ansprüche 23 bis 28, **dadurch gekennzeichnet, dass** mit den Zahnradsätzen (28, 29) jeweils die äußeren Glattwalzen (22, 23) antreibbar sind.

30. Förder- und Trennvorrichtung nach einem der Ansprüche 23 bis 29, **dadurch gekennzeichnet, dass** die antriebsseitigen Zahnradgetriebe (24, 25) durch einen als Förderantrieb (19) vorgesehenen Riementrieb (33) verbunden und synchron bewegbar sind.

31. Förder- und Trennvorrichtung nach einem der Ansprüche 23 bis 30, **dadurch gekennzeichnet, dass** als Zusatzantrieb (27) ein mittels einer Kurbel (40) an der Gestängebaugruppe (26) angreifender Motor (41) zentral im Bereich der Mittellängsebene (M) am Maschinenrahmen (39, 39') abgestützt ist, dabei an der Kurbel (40) endseitig ein Umlenkhebel (42) angelenkt ist und dieser mit einer zu beiden Zahnradgetrieben (24, 25) gerichteten Schubstange (43) zusammenwirkt.

32. Förder- und Trennvorrichtung nach einem der Ansprüche 23 bis 31, **dadurch gekennzeichnet, dass** die zur Schwenkverstellung der Walzenkörper (9 bis 14) vorgesehenen Zahnradgetriebe (24, 25) jeweils mit an den Walzenkörper-Paaren vorgesehenen Antriebszahnrädem (44, 45, 44', 45') in Eingriff befindliche sowie um diese herum bogenförmig schwenkbare Stellzahnräder (46, 47, 46', 47') aufweisen und an diesen die Schubstange (43) angelenkt ist, derart, dass die Schubbewegung des zentralen Zusatzantriebes (27) eine gleichsinnige Schwenkung der mit dem Förderantrieb (19) gleichsinnig umlaufenden Walzenkörper-Paare bewirkt.

33. Förder- und Trennvorrichtung nach Anspruch 32, **dadurch gekennzeichnet, dass** die Stellzahnräder (46, 47, 46', 47') mittels einer Querstange (48, 48') verbunden sind.

34. Förder- und Trennvorrichtung nach Anspruch 32 oder 33, **dadurch gekennzeichnet, dass** die Stellzahnräder (46, 47) durch einen jeweiligen Vertikalhebel (49, 50, 49', 50') schwenkbar auf den Achsen (K, K') der zugeordneten Walzenkörper (9 bis 14) abstützbar sind.

35. Förder- und Trennvorrichtung nach einem der Ansprüche 1 bis 22, **dadurch gekennzeichnet, dass** in axialer Ausrichtung quer zur Förderrichtung (E") des Gemisches (G) verlaufende Walzenkörper (55, 56) mit Zwangsreinigung (Z) eine Trennstrecke (2') nach Art eines Querwalzentisches (1') bilden.

36. Förder- und Trennvorrichtung nach Anspruch 35, **dadurch gekennzeichnet, dass** die Trennstrecke (2') im Bereich sämtlicher eine geneigte Förderebene (60) definierenden Walzenkörper (55 bis 59) einen in Förderrichtung (E") gleichsinnige Drehbewegungen (N) einleitenden Förderantrieb (61) aufweist.

37. Förder- und Trennvorrichtung nach Anspruch 35 oder 36, **dadurch gekennzeichnet, dass** am Ende der Trennstrecke (2') ein Auslassförderer (62) vorgesehen ist.

38. Förder- und Trennvorrichtung nach einem der Ansprüche 35 bis 37, **dadurch gekennzeichnet, dass** die beiden jeweilige Segmente (17, 18) als Mitnahmeprofile (8, 8') aufweisenden Walzenkörper (55, 56) sowohl im gemeinsamen Siebspalt (63) als auch zu den vor- bzw. nachgeordneten Siebspalten (63', 63") hin die Scherzone (15) mit Reinigungsspalt (16) bilden.

39. Förder- und Trennvorrichtung nach einem der Ansprüche 35 bis 38, **dadurch gekennzeichnet, dass** als der für eine Phasenverstellung der schraubenlinienförmig auf den Walzenkörpern (55, 56) verlaufenden Segmente (17, 18) vorgesehene zusätzliche Stellantrieb (20') von einem in den Förderantrieb (61) integrierten Hubstellorgan gebildet ist.

40. Förder- und Trennvorrichtung nach einem der Ansprüche 35 bis 39, **dadurch gekennzeichnet, dass** der Stellantrieb (20') als das Hubstellorgan zumindest eine verschiebbar am Maschinenrahmen (64) gehaltene Umlenkrolle (65, 66) aufweist.

41. Förder- und Trennvorrichtung nach einem der Ansprüche 35 bis 40, **dadurch gekennzeichnet, dass** der als Riementrieb (67) ausgebildete Förderantrieb (61) einen oberhalb der beiden Segment-Walzenkörper (55, 56) verlaufenden Antriebstrum aufweist.

42. Förder- und Trennvorrichtung nach einem der Ansprüche 35 bis 41, **dadurch gekennzeichnet, dass** diese als Auslassförderer (62) eine das Fördergut (E) von der Trennstrecke (2') übernehmende und eine vertikale Umlenkung (U) bewirkende Trenn- und Fördervorrichtung (1") aufweist.

43. Förder- und Trennvorrichtung nach einem der Ansprüche 1 bis 42, **dadurch gekennzeichnet, dass** deren Trennstrecke (69) aus jeweiligen Teilbereichen (2, 2') mit dem Querwalzentisch (1') und dem Axialwalzentisch (1) gebildet ist und zwischen diesen beiden Teilbereichen (2, 2') die Übergabe des Fördergutes (E) mittels einer im Bereich des Auslassförderers (62) wirksamen Trenn- und Fördervorrichtung (1 ") vorgesehen ist.

44. Verfahren zur Trennung von Erntegut wie Kartoffeln oder Rüben aus einem Rodungsgemisch (G) mit Steinen, Kluten, Erden o. dgl. Beimengungen, wobei dieses Gemisch (G) auf eine zumindest zwei Trennwalzen (3) aufweisende Trennstrecke (2, 2', T) aufgelegt, zumindest ein Teil der Beimengungen (G') durch einen Siebspalt (5) ausgetragen und das Erntegut (E) oberseitig weitergeleitet wird, **dadurch gekennzeichnet, daß** die Trennwalzen (3; 55, 56; 76, 78) zumindest während dieses Trennvorgangs unmittelbar gereinigt werden, derart, dass eine unmittelbare Zwangsreinigung (Z) durch im Siebspalt (5) zusammenwirkende Mitnahmeprofile (8, 8'; 17, 18; 75, 75') der Trennwalzen (3; 55, 56; 76, 78) eingeleitet wird.

45. Verfahren nach Anspruch 44 , **dadurch gekennzeichnet, dass** von den Mitnahmeprofilen (8, 8'; 17, 18; 75, 75') der Trennwalzen (3; 55, 56; 76, 78) während des Trennvorganges eine zusätzlich zur Drehbewegung (7, 6; N; 79, 80) im Siebspalt (5) wirksame axiale und/oder radiale Relativbewegung (E; V, V', 82) ausgeübt und damit die Zwangsreinigung (Z) bewirkt wird.

46. Verfahren nach Anspruch 44 oder 45, **gekennzeichnet**, dass mit dem bei der Zwangsreinigung (Z) zusätzlich zur Drehbewegung der Trennwalzen wirksamen Radialversatz bzw. Axialvorschub (H, H'; 84, 85) am Umfang der paarweise zusammenwirkenden Trennwalzen sowie deren Mitnahmeprofilen jeweilige Reib-, Schäl- und/oder Scherphasen vorgegeben werden.

47. Verfahren nach einem der Ansprüche 44 bis 46, **dadurch gekennzeichnet, dass** während des Trennvorganges die Zwangsreinigung (Z) durch einen zuschaltbaren Stellantrieb (20, 20', 83) zeitweilig ausgelöst wird.

48. Förder- und Trennvorrichtung sowie Verfahren mit den Merkmalen nach einem der Ansprüche 1 bis 47 zur Verwendung in einer separaten Fraktioniereinheit (92).

49. Förder- und Trennvorrichtung nach Anspruch 48, **dadurch gekennzeichnet, dass** deren als Fraktioniereinheit zusammenwirkende Trennwalzen (93, 94, 95, 96) bzw. deren umfangsseitige Mitnahmeprofile (90, 90') im Bereich des Durchlassspaltes (5) sowohl auf unterschiedliche Größen des aus dem Gemisch (G) auszusortierenden Erntegutes (E"', E"") als auch auf eine Zwangsreinigung (Z) einstellbar sind.

## Claims

1. Feeding and separating arrangement for root crops, having a separating area (2) which receives a mixture (G) of potatoes, beets or the like harvested crops and stones, clods of soil and the like admixed components and which has at least two separating rollers (3) which are driven in rotation, on which separating rollers (3) principally the harvested crops (E) can be fed onwards on the top thereof and, in the course of this, principally admixed components (G') can be discharged through a screening gap (5) which operates between the separating rollers (3) in a screening phase, **characterised in that** the separating rollers (3) can be kept free at least of parts of the mixture (G) able to cling to them by direct forced cleaning (Z), in such a way that at least one entraining profile (8, 8') which is provided on the separating rollers (3) produces a radial and axial removing effect in the screening gap (5).

2. Feeding and separating arrangement according to claim 1, **characterised in that** the forced cleaning (Z) takes place in the region of the screening gap (5)

3. Feeding and separating arrangement according to claim 1 or 2, **characterised in that** the forced cleaning (Z) can be performed constantly in the screening phase.

4. Feeding and separating arrangement according to one of claims 1 to 3, **characterised in that** parts of the infed mixture (G) which cling and/or are able to cling between separating rollers (3) which co-operate in pairs can be picked up by the forced cleaning (Z).

5. Feeding and separating arrangement according to one of claims 1 to 4, **characterised in that** respective force-cleaning and screening phases can be defined in the screening gap (5) by active zones (W) which are offset in the direction defined by the separating area (2).

6. Feeding and separating arrangement according to one of claims 1 to 5, **characterised in that** what are provided as separating rollers (3) are bodies in roller form (9, 10, 11, 12, 13, 14) which are known per se and which have an entraining profile (8, 8') on their circumference, and these bodies in roller form (9, 10, 11, 12, 13, 14) co-operate in pairs both to feed onward (E) and separate (G') the parts of the mixture, and to directly and constantly force-clean (Z) the screening gap (5).

7. Feeding and separating arrangement according to one of claims 1 to 6, **characterised in that** the bodies in roller form which are arranged in pairs (9, 10; 11, 12; 13, 14) have entraining profiles (8, 8') which can be brought together radially and/or axially, the said entraining profiles (8, 8') co-operate in the screening gap (5), which is defined as a clear distance between the bodies in roller form, and, with the cleaning gap (16) which effects the forced cleaning (Z), at least one shear zone (15) can be preset in the screening gap (5).

8. Feeding and separating arrangement according to one of claims 1 to 7, **characterised in that** the entraining profiles (8, 8'), which have a meshing interengagement and which belong to the bodies in roller form, which latter rotate in pairs (9, 10; 11, 12; 13, 14) in opposite directions, form a forced-cleaning (Z) system which operates in the shear zones (15) after the fashion of a mechanically abrasive or peeling system.

9. Feeding and separating arrangement according to one of claims 1 to 8, **characterised in that** respective shear zones (15) including a cleaning gap (16) which cover the lengths of the rollers and extend completely around them circumferentially are created by an axial displacement of the bodies in roller form (9, 10, 11, 12, 13, 14) relative to one another and/or by a radial pivoting adjustment thereof.

10. Feeding and separating arrangement according to one of claims 1 to 9, **characterised in that** parts of the mixture (G) which are able to cling and which make their way into the cleaning gap (16) can be wiped off, in the region of the entraining profiles (8, 8') which act as continuous cleaning members, both from the faces of these latter and from the circumferences of the bodies in roller form (9, 10, 11, 12, 13, 14).

11. Feeding and separating arrangement according to one of claims 1 to 10, **characterised in that**, as dictated by their geometry, position and/or the shape of their faces, the entraining profiles (8, 8') create respective cleaning gaps (16) which can be variably preset.

12. Feeding and separating arrangement according to one of claims 1 to 11, **characterised in that** the entraining profiles (8, 8') extend around the circumference of the bodies in roller form (9, 10, 11, 12, 13, 14) helically.

13. Feeding and separating arrangement according to claim 12, **characterised in that** the helical bodies of the profiles on adjacent bodies in roller form (9, 10) are opposite handed with opposite helix angles (S, S').

14. Feeding and separating arrangement according to claim 12 or 13, **characterised in that** the bodies in roller form (9, 10, 11, 12, 13, 14) are formed in one piece with the entraining profiles (8, 8') which create the cleaning gaps (18).

15. Feeding and separating arrangement according to claim 12 or 13, **characterised in that** the helical entraining profiles (8, 8') are made up of segments (17, 18).

16. Feeding and separating arrangement according to one of claims 1 to 13, **characterised in that** the entraining profiles (8, 8') take the form of fingered profiles which are at an axial spacing on the bodies in roller form (9, 10, 11, 12, 13, 14).

17. Feeding and separating arrangement according to one of claims 1 to 16, **characterised in that**, in the region of the at least one pair of co-operating bodies in roller form (9 to 14) which are able to be driven by means of a feeding drive (19) known per se, the arrangement (1, 1') has at least one positioning drive (20) by which at least one of the bodies in roller form can, in addition, be displaced radially and/or axially.

18. Feeding and separating arrangement according to claim 17, **characterised in that** the feeding drive (19) and the at least one positioning drive (20) can be switched on simultaneously in such a way that the forced cleaning (Z) in the region of the entraining profiles (8, 8') can be activated at the pairs of bodies in roller form.

19. Feeding and separating arrangement according to claim 17 or 18, **characterised in that** a plurality of positioning drives are provided in addition to the feeding drive (19).

20. Feeding and separating arrangement according to one of claims 17 to 19, **characterised in that** the feeding drive (19) acts simultaneously with the radial and the axial positioning drive.

21. Feeding and separating arrangement according to one of claims 17 to 20, **characterised in that** one common positioning drive (20) acts on a plurality of co-operating pairs of bodies in roller form by means of a connecting transmission (21), in such a way that the respective entraining profiles (8, 8') of the co-operating pairs of bodies in roller form produce the radial and axial forced cleaning (Z) as a result of a pivoting and/or thrust adjustment.

22. Feeding and separating arrangement according to one of claims 17 to 21, **characterised in that** the positioning drive (20) and the connecting transmission (21) are provided at the end of the bodies in roller form.

23. Feeding and separating arrangement according to one of claims 1 to 22, **characterised in that**, with bodies in roller form which extend in the axial direction parallel to the direction of feed (E) of the mixture (G), it forms a separating area (T) of a type similar to an axial roller table.

24. Feeding and separating arrangement according to claim 23, **characterised in that**, in a layout which is largely of mirror symmetry, the axial roller table has, starting from its longitudinal centre plane (M) which extends between a first pair of bodies in roller form (11, 12), arranged next thereto both a second and a third pair of bodies in roller form (9, 10; 13, 14) each having bodies in roller form rotating in opposite directions.

25. Feeding and separating arrangement according to claim 23 or 24, **characterised in that** the pairs of bodies in roller form which are each provided with entraining profiles (8, 8') rotating in opposite directions towards the screening gap (5) are also at a spacing (D), from each pair arranged next to them, which creates a screening gap (5').

26. Feeding and separating arrangement according to one of claims 23 to 25, **characterised in that** the second and the third pair of bodies in roller form (9, 10; 13, 14) each have associated with them on the outside, as a separating member, an additional smooth roller (22, 23)

27. Feeding and separating arrangement according to one of claims 23 to 26, **characterised in that** the three pairs of bodies in roller form have at one end, in the region of the positioning drive (20), respective gear trains (24, 25) directly engaging the second and the third pair (9, 10; 13, 14), and these gear trains (24, 25) can be connected to an additional drive (27) having a linkage sub-assembly (26).

28. Feeding and separating arrangement according to one of claims 23 to 27, **characterised in that**, in an opposite position from the positioning drive (20), the three pairs of bodies in roller form are connected by two sets of gears (28, 29) which are separated centrally in the region of the longitudinal centre plane (M).

29. Feeding and separating arrangement according to one of claims 23 to 28, **characterised in that** the outer smooth rollers (22, 23) can be driven by respective ones of the gear sets (28, 29).

30. Feeding and separating arrangement according to one of claims 23 to 29, **characterised in that** the gear trains (24, 25) at the drive end are connected, and can be moved in synchronisation, by a belt drive (33) which is provided as a feeding drive (19).

31. Feeding and separating arrangement according to one of claims 23 to 30, **characterised in that**, to act as the additional drive (27), a motor (41) which engages with the linkage sub-assembly (26) by means of a crank (40) is centrally supported in the frame (39, 39') of the machine in the region of the longitudinal centre plane (M), and a re-directing link (42) is hinged to the end of the crank (40) and co-operates with a thrust bar (43) which points towards the two gear trains (24, 25).

32. Feeding and separating arrangement according to one of claims 23 to 31, **characterised in that** the gear trains (24, 25) which are provided for the pivoting adjustment of the bodies in roller form (9 to 14) each have positioning gears (46, 47, 46' 47'), which positioning gears (46, 47, 46' 47') engage with drive gears (44, 45, 44', 45') provided on the pairs of bodies in roller form and can be pivoted around these latter gears in an arc, and the thrust bar (43) is linked to these latter gears, in such a way that the thrust movement of the central additional drive (27) causes a pivoting movement in the same direction of the pairs of bodies in roller form which are rotated in the same direction by the feeding drive (19).

33. Feeding and separating arrangement according to claim 32, **characterised in that** the positioning gears (46, 47, 46', 47') are connected by means of a transverse bar (48, 48').

34. Feeding and separating arrangement according to claim 32 or 33, **characterised in that** the positioning gears (46, 47) can be supported by respective vertical arms (49, 50, 49', 50') to be pivotable on the shafts (K, K') of the associated bodies in roller form (9 to 14).

35. Feeding and separating arrangement according to one of claims 1 to 22, **characterised in that** bodies in roller form (55, 56) effecting forced cleaning (Z) which extend transversely to the direction of feed (E") of the mixture (G) in their axial direction form a separating area (2') of a type similar to a transverse roller table (1').

36. Feeding and separating arrangement according to claim 35, **characterised in that** the separating area (2') has, in the region of all the bodies in roller form (55 to 59), which bodies in roller form (55 to 59) define an inclined plane of feed (60), a feeding drive (61) which initiates rotary movements (N) in the same direction in the direction of feed (E").

37. Feeding and separating arrangement according to claim 35 or 36, **characterised in that** an outlet feeder (62) is provided at the end of the separating area (2').

38. Feeding and separating arrangement according to one of claims 35 to 37, **characterised in that** the two bodies in roller form (55, 56) which have respective segments (17, 18) acting as entraining profiles (8, 8') form the shear zone (15) plus cleaning gap (16), both at the common screening gap (63) and towards the screening gaps (63', 63") positioned upstream and downstream.

39. Feeding and separating arrangement according to one of claims 35 to 38, **characterised in that** the additional positioning drive (20') provided for a phase shift of the segments (17, 18) extending in helices along the bodies in roller form (55, 56) is formed by a member for vertical positioning incorporated in the feeding drive (61)

40. Feeding and separating arrangement according to one of claims 35 to 39, **characterised in that** the positioning drive (20') has, as the member for vertical positioning, at least one direction-changing roller (65, 66) which is displaceably mounted on the frame (64) of the machine.

41. Feeding and separating arrangement according to one of claims 35 to 40, **characterised in that** the feeding drive (61) which takes the form of a belt drive (67) has a driving run which extends above the two segment-carrying bodies in roller form (55, 56).

42. Feeding and separating arrangement according to one of claims 35 to 41, **characterised in that** it has, as an outlet feeder (62), a separating and feeding arrangement (1 ") which takes over the fed material (E) from the separating area (2') and which causes a change of direction (U) to the vertical.

43. Feeding and separating arrangement according to one of claims 1 to 42, **characterised in that** its separating area (69) is formed by respective sub-regions (2, 2') which have the transverse roller table (1') and the axial roller table (1) and provision is made between these two sub-regions (2, 2') for the fed material (E) to be transferred by means of a separating and feeding arrangement (1") which acts in the region of the outlet feeder (62).

44. Method of separating harvested crops such as potatoes or beets from a lifted mixture (G) containing stones, clods of soil, earth or the like admixed components this mixture (G) being deposited on a separating area (2, 2', T) which has at least two separating rollers (3), at least some of the admixed components (G') being discharged through a screening gap (5) and the harvested crops (E) being fed onwards on the top, **characterised in that** the separating rollers (3; 55, 56; 76, 78) are directly cleaned at least during this separating process in such a way that direct forced cleaning (Z) by entraining profiles (8, 8'; 17, 18; 75, 75') which co-operate in the screening gap (5) and which belong to the separating rollers (3; 55, 56; 76, 78) is initiated.

45. Method according to claim 44, **characterised in that**, during the separating process, the entraining profiles (8, 8'; 17, 18; 75, 75') of the separating rollers (3; 55, 56; 76, 78) perform an axial and/or radial relative movement (E; V, V', 82) which comes into play in the screening gap (5) in addition to the rotary movement (7, 6; N, 79, 80), and thereby cause the forced cleaning (Z).

46. Method according to claim 44 or 45, **characterised in that** the radial offset or axial advance (H, H'; 84, 85) which comes into play in the course of the forced cleaning (Z) at the circumference of the separating rollers which co-operate in pairs and of their entraining profiles in addition to the rotary movement of the separating rollers presets respective rubbing, peeling and/or shear phases.

47. Method according to one of claims 44 to 46, **characterised in that**, during the separating process, the forced cleaning (Z) is triggered intermittently by a positioning drive (20, 20', 83) which can be switched on.

48. Feeding and separating arrangement and method, having the features of one of claims 1 to 47, for use in a separate fractionating unit (92).

49. Feeding and separating arrangement according to claim 48, **characterised in that** its separating rollers (93, 94, 95, 96) which co-operate as a fractionating unit and the circumferential entraining profiles (90, 90') of the latter can be set, in the region of the gap (5) which allows items to pass through, both for different sizes of the harvested crop (E"', E"") which is to be sorted out of the mixture (G) and for forced cleaning (Z).

## Revendications

1. Dispositif de transport et de séparation pour fruits de hachage, avec une section de séparation (2) recevant des pommes de terre, des betteraves ou produits de récolte similaires ainsi que des pierres, des mottes et des impuretés similaires, présentant au moins deux rouleaux de séparation (3) entraînés en rotation, auxquels le produit de récolte (E) peut être sensiblement transmis côté supérieur et sur lesquels des impuretés (G') peuvent sensiblement être déversées par une fente de tamisage (5) active dans une phase de tamisage entre les rouleaux de séparation (3), **caractérisé en ce que** les rouleaux de séparation (3) peuvent être protégés par un nettoyage forcé direct (Z) au moins de parties pouvant adhérer du mélange (G) de telle manière qu'au moins un profilé d'entraînement (8, 8') prévu sur les rouleaux de séparation (3) provoque un effet d'enlèvement radial et axial dans la fente de tamisage (5).

2. Dispositif de transport et de séparation selon la revendication 1, **caractérisé en ce que** le nettoyage forcé (Z) est effectué dans la zone de la fente de tamisage (5).

3. Dispositif de transport et de séparation selon la revendication 1 ou 2, **caractérisé en ce que** le nettoyage forcé (Z) peut être réalisé de manière permanente dans la phase de tamisage.

4. Dispositif de transport et de séparation selon l'une quelconque des revendications 1 à 3, **caractérisé en ce que** des parties du mélange amené (G) adhérant ou pouvant adhérer entre des rouleaux de séparation (3) coagissant par paires peuvent être saisies avec le nettoyage forcé (Z).

5. Dispositif de transport et de séparation selon l'une quelconque des revendications 1 à 4, **caractérisé en ce que** des phases de nettoyage forcé et de tamisage respectives peuvent être définies en même temps dans la fente de tamisage (5) par des zones actives (W) décalées en direction de la section de séparation (2).

6. Dispositif de transport et de séparation selon l'une quelconque des revendications 1 à 5, **caractérisé en ce que** comme rouleaux de séparation (3) sont prévus des corps de roulement (9, 10, 11, 12, 13, 14) connus en soi et présentant un profilé d'entraînement (8, 8') côté périphérie et **en ce que** ceux-ci coagissent par paires non seulement pour la transmission (E) et la séparation (G') des parties de mélange mais aussi pour le nettoyage forcé (Z) direct et permanent de la fente de tamisage (5).

7. Dispositif de transport et de séparation selon l'une quelconque des revendications 1 à 6, **caractérisé en ce que** les corps de roulement (9, 10 ; 11, 12 ; 13, 14) disposés par paires présentent des profilés d'entraînement (8, 8') pouvant être réunis radialement et/ou axialement, **en ce que** ceux-ci coagissent dans la fente de tamisage (5) définie comme largeur intérieure entre les corps de roulement et **en ce que** dans celle-ci peut être prescrite au moins une fente de nettoyage (16) provoquant des zones de cisaillement (15) avec le nettoyage forcé (Z).

8. Dispositif de transport et de séparation selon l'une quelconque des revendications 1 à 7, **caractérisé en ce que** les profilés d'entraînement (8, 8') présentant un engrenage des corps de roulement (9, 10 ; 11, 12 ; 13, 14) tournant par paires en sens inverse forment un nettoyage forcé (Z) actif dans les zones de cisaillement (15) comme un système pelant ou abrasif mécaniquement.

9. Dispositif de transport et de séparation selon l'une quelconque des revendications 1 à 8, **caractérisé en ce que** les zones de cisaillement (15) détectant les longueurs de rouleaux ainsi que tournant entièrement dans le sens radial avec la fente de nettoyage (16) sont formées chacune par un déplacement axial des corps de roulement (9, 10, 11, 12, 13, 14) les uns par rapport aux autres et/ou leur mouvement de pivotement radial.

10. Dispositif de transport et de séparation selon l'une quelconque des revendications 1 à 9, **caractérisé en ce que** des parties du mélange (G) pouvant adhérer parvenant dans la fente de nettoyage (16) peuvent être raclées dans la zone des profilés d'entraînement (8, 8') actifs comme des organes de nettoyage continus non seulement de leur contour mais aussi de la périphérie des corps de roulement (9, 10, 11, 12, 13, 14).

11. Dispositif de transport et de séparation selon l'une quelconque des revendications 1 à 10, **caractérisé en ce que** les profilés d'entraînement (8, 8') forment des fentes de nettoyage (16) respectives, prescriptibles de manière variable selon leur géométrie, agencement et/ou contour.

12. Dispositif de transport et de séparation selon l'une quelconque des revendications 1 à 11, **caractérisé en ce que** les profilés d'entraînement (8, 8') s'étendent de manière hélicoïdale sur la périphérie des corps de roulement (9, 10, 11, 12, 13, 14).

13. Dispositif de transport et de séparation selon la revendication 12, **caractérisé en ce que** les corps de profilé hélicoïdaux des corps de roulement contigus (9, 10) s'étendent avec un pas opposé (S, S').

14. Dispositif de transport et de séparation selon la revendication 12 ou 13, **caractérisé en ce que** les corps de roulement (9, 10, 11, 12, 13, 14) sont réalisés d'un seul tenant avec les profilés d'entraînement (8, 8') formant les fentes de nettoyage (16).

15. Dispositif de transport et de séparation selon la revendication 12 ou 13, **caractérisé en ce que** les profilés d'entraînement (8, 8') hélicoïdaux sont composés de segments (17, 18).

16. Dispositif de transport et de séparation selon l'une quelconque des revendications 1 à 13, **caractérisé en ce que** les profilés d'entraînement (8, 8') sont réalisés comme des profilés de doigt présentant un écartement axial sur le corps de roulement (9, 10, 11, 12, 13, 14).

17. Dispositif de transport et de séparation selon l'une quelconque des revendications 1 à 16, **caractérisé en ce que** le dispositif (1, 1') présente dans la zone des corps de roulement (9 à 14) pouvant être entraînés à l'aide d'un entraînement de transport (19) connu en soi et coagissant comme au moins une paire, au moins un mécanisme de commande (20), avec lequel au moins l'un des corps de roulement peut être déplacé en outre radialement et/ou axialement.

18. Dispositif de transport et de séparation selon la revendication 17, **caractérisé en ce que** l'entraînement de transport (19) et au moins un mécanisme de commande (20) peuvent être mis en circuit en même temps de telle manière que le nettoyage forcé (Z) puisse être activé dans la zone des profilés d'entraînement (8, 8') sur les paires de corps de roulement.

19. Dispositif de transport et de séparation selon la revendication 17 ou 18, **caractérisé en ce que** plusieurs mécanismes de commande sont prévus outre l'entraînement de transport (19).

20. Dispositif de transport et de séparation selon l'une quelconque des revendications 17 à 19, **caractérisé en ce que** l'entraînement de transport (19) agit en même temps que le mécanisme de commande radial et le mécanisme de commande axial.

21. Dispositif de transport et de séparation selon l'une quelconque des revendications 17 à 20, **caractérisé en ce qu'**un mécanisme de commande (20) commun est actif à l'aide d'une liaison par engrenage (21) sur plusieurs paires coagissantes de corps de roulement de telle manière que leurs profilés d'entraînement (8, 8') respectifs provoquent le nettoyage forcé (Z) radial et axial par un mouvement de pivotement et/ou de poussée.

22. Dispositif de transport et de séparation selon l'une quelconque des revendications 17 à 21, **caractérisé en ce que** le mécanisme de commande (20) et la liaison par engrenage (21) sont prévus côté extrémité sur les corps de roulement.

23. Dispositif de transport et de séparation selon l'une quelconque des revendications 1 à 22, **caractérisé en ce que** celui-ci forme une section de séparation (T) à la manière d'une table à rouleaux axiaux avec des corps de roulement s'étendant en orientation axiale parallèlement au sens de transport (E) du mélange (G).

24. Dispositif de transport et de séparation selon la revendication 23, **caractérisé en ce que** la table à rouleaux axiaux présente de manière coordonnée dans un agencement largement inversé en partant de son plan médian longitudinal (M) s'étendant entre une première paire de corps de roulement (11, 12) non seulement une deuxième mais aussi une troisième paires de corps de roulement (9, 10 ; 13, 14) avec des corps de roulement tournant respectivement en sens inverse.

25. Dispositif de transport et de séparation selon la revendication 23 ou 24, **caractérisé en ce que** les paires de corps de roulement pourvues respectivement de profilés d'entraînement (8, 8') tournant en sens inverse vers la fente de tamisage (5) présentent aussi respectivement vers la paire coordonnée, un écartement (D) formant une fente de tamisage (5').

26. Dispositif de transport et de séparation selon l'une quelconque des revendications 23 à 25, **caractérisé en ce qu'**un rouleau lisse (22, 23) supplémentaire est associé respectivement côté extérieur comme élément de séparation à la deuxième et à la troisième paire de corps de roulement (9, 10 ; 13, 14).

27. Dispositif de transport et de séparation selon l'une quelconque des revendications 23 à 26, **caractérisé en ce que** les trois paires de corps de roulement présentent d'une part, dans la zone du mécanisme de commande (20), des engrenages (24, 25) respectifs saisissant directement la deuxième ainsi que la troisième paires (9, 10 ; 13, 14) et **en ce que** ceux-ci peuvent être reliés à un entraînement supplémentaire (27) présentant un ensemble de tringles (26).

28. Dispositif de transport et de séparation selon l'une quelconque des revendications 23 à 27, **caractérisé en ce que** les trois paires de corps de roulement sont reliées à l'opposé du mécanisme de commande (20) par deux jeux de roues dentées (28, 29) séparés au milieu dans la zone du plan médian longitudinal (M).

29. Dispositif de transport et de séparation selon l'une quelconque des revendications 23 à 28, **caractérisé en ce que** respectivement les rouleaux lisses extérieurs (22, 23) peuvent être entraînés avec les jeux de roues dentées (28, 29).

30. Dispositif de transport et de séparation selon l'une quelconque des revendications 23 à 29, **caractérisé en ce que** les engrenages (24, 25) côté entraînement peuvent être reliés et déplacés de manière synchrone par un entraînement par courroie (33) prévu comme entraînement de transport (19).

31. Dispositif de transport et de séparation selon l'une quelconque des revendications 23 à 30, **caractérisé en ce qu'**un moteur (41) agissant à l'aide d'une manivelle (40) sur l'ensemble de tringles (26) est en appui comme entraînement supplémentaire (27) de manière centrale dans la zone du plan médian longitudinal (M) contre le bâti de machine (39, 39'), **en ce qu'**un levier de renvoi (42) est articulé côté extrémité à la manivelle (40) et **en ce que** celui-ci coagit avec une bielle (43) dirigée vers les deux engrenages (24, 25).

32. Dispositif de transport et de séparation selon l'une quelconque des revendications 23 à 31, **caractérisé en ce que** les engrenages (24, 25) prévus pour le mouvement de pivotement des corps de roulement (9 à 14) présentent respectivement des roues dentées de réglage (46, 47, 46', 47') se trouvant en engagement avec des roues dentées d'entraînement (44, 45 ; 44', 45') prévues sur les paires de corps de roulement ainsi que pouvant pivoter autour de celles-ci en arc et auxquelles roues dentées de réglage est articulée la bielle (43) de telle manière que le mouvement de poussée de l'entraînement supplémentaire central (27) provoque un pivotement dans le même sens des paires de corps de roulement tournant dans le même sens avec l'entraînement de transport (19).

33. Dispositif de transport et de séparation selon la revendication 32, **caractérisé en ce que** les roues dentées de réglage (46, 47, 46', 47') sont reliées à l'aide d'une barre transversale (48, 48').

34. Dispositif de transport et de séparation selon la revendication 32 ou 33, **caractérisé en ce que** les roues dentées de réglage (46, 47) peuvent être en appui de manière à pouvoir pivoter par un levier vertical (49, 50, 49', 50') respectif sur les axes (K, K') des corps de roulement associés (9 à 14).

35. Dispositif de transport et de séparation selon l'une quelconque des revendications 1 à 22, **caractérisé en ce que** des corps de roulement (55, 56) s'étendant en orientation axiale transversalement au sens de déplacement (E") du mélange (G) forment avec le nettoyage forcé (Z) une section de séparation (2') à la manière d'une table à rouleaux transversaux (1').

36. Dispositif de transport et de séparation selon la revendication 35, **caractérisé en ce que** la section de séparation (2') présente dans la zone de tous les corps de roulement (55 à 59) définissant un plan de transport incliné (60), un entraînement de transport (61) engageant dans le sens de transport (E") des mouvements de rotation (N) dans le même sens.

37. Dispositif de transport et de séparation selon la revendication 35 ou 36, **caractérisé en ce qu'**un convoyeur de sortie (62) est prévu sur l'extrémité de la section de séparation (2').

38. Dispositif de transport et de séparation selon l'une quelconque des revendications 35 à 37, **caractérisé en ce que** les deux segments respectifs (17, 18) en tant que corps de roulement (55, 56) présentant des profilés d'entraînement (8, 8') forment la zone de cisaillement (15) avec la fente de nettoyage (16) non seulement dans la fente de tamisage (63) commune mais aussi vers les fentes de tamisage (63', 63") disposées en amont ou en aval.

39. Dispositif de transport et de séparation selon l'une quelconque des revendications 35 à 38, **caractérisé en ce que** le mécanisme de commande (20') supplémentaire prévu pour un réglage de phase des segments (17, 18) s'étendant en forme d'hélice sur les corps de roulement (55, 56) est formé par un organe de réglage de levage intégré dans l'entraînement de transport (61).

40. Dispositif de transport et de séparation selon l'une quelconque des revendications 35 à 39, **caractérisé en ce que** le mécanisme de commande (20') présente comme l'organe de réglage de levage au moins une poulie de renvoi (65, 66) maintenue de manière mobile sur le bâti de machine (64).

41. Dispositif de transport et de séparation selon l'une quelconque des revendications 35 à 40, **caractérisé en ce que** l'entraînement de transport (61) réalisé comme un entraînement par courroie (67) présente un brin menant s'étendant au-dessus des deux corps de roulement de segment (55, 56).

42. Dispositif de transport et de séparation selon l'une quelconque des revendications 35 à 41, **caractérisé en ce que** celui-ci présente, comme convoyeur de sortie (62), un dispositif de séparation et de transport (1") provoquant un renvoi vertical (U) et prenant le produit de transport (E) de la section de séparation (2').

43. Dispositif de transport et de séparation selon l'une quelconque des revendications 1 à 42, **caractérisé en ce que** sa section de séparation (69) est constituée de zones partielles respectives (2, 2') avec la table à rouleaux transversaux (1') et la table à rouleaux axiaux (1) et entre ces deux zones partielles (2, 2') est prévue la remise du produit de transport (E) à l'aide d'un dispositif de transport et de séparation (1") actif dans la zone du convoyeur de sortie (62).

44. Procédé de séparation de produit de récolte tel que des pommes de terre ou des betteraves d'un mélange de défrichement (G) contenant des pierres, des mottes, des terres ou impuretés similaires, sachant que ce mélange (G) est posé sur une section de séparation (2, 2', T) présentant au moins deux rouleaux de séparation (3), au moins une partie des impuretés (G') est déversée par une fente de tamisage (5) et le produit de récolte (E) est transmis côté supérieur, **caractérisé en ce que** les rouleaux de séparation (3 ; 55, 56 ; 76, 78) sont directement nettoyés au moins pendant ce processus de séparation de telle manière qu'un nettoyage forcé (Z) direct soit engagé par des profilés d'entraînement (8, 8' ; 17, 18 ; 75, 75') coagissant dans la fente de tamisage (5) des rouleaux de séparation (3 ; 55, 56 ; 76, 78).

45. Procédé selon la revendication 44, **caractérisé en ce qu'**un mouvement relatif (E ; V, V', 82) axial et/ou radial actif, outre le mouvement de rotation (7, 6 ; N ; 79, 80) dans la fente de tamisage (5) est exercé par les profilés d'entraînement (8, 8' ; 17, 18 ; 75, 75') des rouleaux de séparation (3 ; 55, 56 ; 76, 78) pendant le processus de séparation et **en ce que** le nettoyage forcé (Z) est ainsi provoqué.

46. Procédé selon la revendication 44 ou 45, **caractérisé en ce que** des phases de frottement, de pelage et/ou de cisaillement sont prescrites avec le décalage radial ou l'avance axiale (H, H' ; 84, 85) actif lors du nettoyage forcé (Z) outre le mouvement de rotation des rouleaux de séparation, sur la périphérie des rouleaux de séparation coagissant par paires ainsi que leurs profilés d'entraînement.

47. Procédé selon l'une quelconque des revendications 44 à 46, **caractérisé en ce que** le nettoyage forcé (Z) est déclenché temporairement pendant le processus de séparation par un mécanisme de commande (20, 20', 83) pouvant être mis en circuit.

48. Dispositif de transport et de séparation ainsi que procédé présentant les caractéristiques selon l'une quelconque des revendications 1 à 47 destinés à être utilisés dans une unité de fractionnement séparée (92).

49. Dispositif de transport et de séparation selon la revendication 48, **caractérisé en ce que** ses rouleaux de séparation (93, 94, 95, 96) coagissant comme une unité de fractionnement ou leurs profilés d'entraînement (90, 90') côté périphérie peuvent être réglés dans la zone de la fente de passage (5) non seulement à différentes grandeurs du produit de récolte (E"', E"") à trier du mélange (G) mais aussi sur un nettoyage forcé (Z).
